(19) Europäisches Patentamt
European Patent Office
Office européen des brevets

(11) **EP 4 700 716 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
*G06V 10/764* (2022.01)

(21) Application number: 24814545.0

(22) Date of filing: **30.05.2024**

(86) International application number:
**PCT/CN2024/096385**

(87) International publication number:
**WO 2024/245349 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 CN 202310627422**

(71) Applicant: Huawei Technologies Co., Ltd.
Shenzhen, Guangdong 518129 (CN)

(72) Inventors:
• **LI, Wei**
Shenzhen, Guangdong 518129 (CN)
• **ZHANG, Guoyang**
Shenzhen, Guangdong 518129 (CN)
• **CHEN, Liyu**
Shenzhen, Guangdong 518129 (CN)
• **HU, Jie**
Shenzhen, Guangdong 518129 (CN)
• **LIU, Junchao**
Shenzhen, Guangdong 518129 (CN)
• **CHEN, Hanting**
Shenzhen, Guangdong 518129 (CN)
• **WANG, Yunhe**
Shenzhen, Guangdong 518129 (CN)

(74) Representative: **MERH-IP Matias Erny Reichl Hoffmann**
**Patentanwälte PartG mbB**
**Paul-Heyse-Straße 29**
**80336 München (DE)**

(54) **DATA PROCESSING METHOD AND APPARATUS**

(57) A data processing method is applied to image processing. The method includes: obtaining a first image and a second image, where the first image and the second image include text; obtaining an image feature of the first image and an image feature of the second image through a first neural network; obtaining, through a second neural network, a text feature of text included in the first image and a text feature of text included in the second image; performing fusion on a first feature representation and a third feature representation to obtain a first target feature representation; performing fusion on a second feature representation and a fourth feature representation to obtain a second target feature representation; determining a loss based on a relationship between the first target feature representation and the second target feature representation; and updating the first neural network based on the loss. In this application, an image feature and a text feature of an image including text are extracted, fusion is performed on the image feature and the text feature, and a model is updated by using a feature representation obtained through fusion, to improve recognition precision of a trained model for the image including text.

[FIG. 6]

Obtain a first image and a second image, where the first image and the second image include text — 601

Separately process the first image and the second image through a first neural network, to obtain a first feature representation and a second feature representation, where the first feature representation is an image feature of the first image, and the second feature representation is an image feature of the second image — 602

Separately process the first image and the second image through a second neural network, to obtain a third feature representation and a fourth feature representation, where the first feature representation is a text feature of text included in the first image, and the second feature representation is a text feature of text included in the second image — 603

Perform fusion on the first feature representation and the third feature representation to obtain a first target feature representation — 604

Perform fusion on the second feature representation and the fourth feature representation to obtain a second target feature representation — 605

Determine a loss based on a relationship between the first target feature representation and the second target feature representation, and update the first neural network based on the loss — 606

**Description**

This application claims priority to Chinese Patent Application No. 202310627422.0, filed with the China National Intellectual Property Administration on May 30, 2023 and entitled "DATA PROCESSING METHOD AND APPARATUS", which is incorporated herein by reference in its entirety.

TECHNICAL FIELD

This application relates to the artificial intelligence field, and in particular, to a data processing method and apparatus.

BACKGROUND

Artificial intelligence (Artificial Intelligence, AI) is a theory, a method, a technology, and an application system in which human intelligence is simulated, extended, and expanded by using digital computers or machines controlled by digital computers, to perceive environments, obtain knowledge, and achieve optimal results by using the knowledge. In other words, AI is a branch of computer science that seeks to understand the essence of intelligence and to create a new kind of intelligent machine able to respond in ways similar to human intelligence. AI research focuses on design principles and implementation methods of various intelligent machines, to enable the machines to possess the functions of perception, reasoning, and decision-making.

Trademark recognition is widely used in e-commerce and machine vision, and typical applications include copyright discrimination, brand recognition, product search and recommendation, and the like. Trademark recognition is widely used in many industrial vision scenarios, such as target customer recognition, hazardous chemical recognition, and product inspection.

Existing algorithms for object detection-based trademark recognition use object extraction models to detect all potential target image areas in input images as candidates; then classify candidate areas using image classification networks, and outputs a prediction that a target trademark exists or a prediction that no trademark exists. However, the existing image classification networks solely rely on image features for trademark recognition, leading to poor trademark recognition precision.

SUMMARY

This application provides a data processing method, to improve recognition precision of a model for an image including text.

According to a first aspect, this application provides a data processing method, including: obtaining a first image, where the first image includes text; processing the first image through a first neural network, to obtain a first feature representation, where the first feature representation is an image feature of the first image; processing the first image through a second neural network, to obtain a second feature representation, where the second feature representation is a text feature of the text included in the first image; performing fusion on the first feature representation and the second feature representation to obtain a first target feature representation; and determining a category of the first image based on the first target feature representation.

In the foregoing manner, both an image feature of an image including text and a text feature of the text are extracted, fusion is performed on the image feature and the text feature, and a feature representation obtained through fusion is used for trademark recognition, to improve recognition precision of a model for the image including text.

In a possible implementation, the first image is a trademark, and the determining the category of the first image based on the first target feature representation includes: determining a category of the trademark based on similarities between the first target feature representation and a plurality of preset feature representations, where each preset feature representation is obtained by performing feature extraction on a trademark of one category.

In a possible implementation, the method further includes: performing dimension alignment between the second feature representation and the first feature representation; and the performing fusion on the first feature representation and the second feature representation to obtain the first target feature representation includes: performing fusion on the first feature representation and the second feature representation after the dimension alignment, to obtain the first target feature representation.

In a possible implementation, the first target feature representation and each preset feature representation are features mapped to hyperbolic space. Hyperbolic metric space may adapt to multi-level data structures.

According to a second aspect, an embodiment of this application provides a data processing method, including: obtaining a first image and a second image, where the first image and the second image include text; separately processing the first image and the second image through a first neural network, to obtain a first feature representation and a second feature representation, where the first feature representation is an image feature of the first image, and the second feature representation is an image feature of the second image; separately processing the first image and the second image through a second neural network, to obtain a third feature representation and a fourth feature representation, where the first feature representation is a text feature of text included in the first image, and the second feature representation is a text feature of text included in the second image; performing fusion on the first feature representation and the third feature representation to obtain a first target feature representation; performing fusion on the second feature representation and the fourth feature representation to obtain a second target feature representation; and determining a loss based on a relationship between the first target feature representation and the second target feature representation, and updating the first neural network based on the loss.

In the foregoing manner, both an image feature of an image including text and a text feature of the text are extracted, fusion is performed on the image feature and the text feature, and a feature representation obtained through fusion is used for trademark recognition, to improve recognition precision of a model for the image including text.

In a possible implementation, the first image and the second image include a trademark.

In a possible implementation, the first image and the second image include different styles of a same trademark, and the determining the loss based on the relationship between the first target feature representation and the second target feature representation includes: determining the loss through contrastive learning based on the relationship between the first target feature representation and the second target feature representation, where the loss is used to increase a first distance between the first target feature representation and the second target feature representation.

In a possible implementation, the first image and the second image include different trademarks, and the determining the loss based on the relationship between the first target feature representation and the second target feature representation includes: determining the loss through contrastive learning based on the relationship between the first target feature representation and the second target feature representation, where the loss is used to increase a second distance between the first target feature representation and the second target feature representation, and an increase in the second distance is greater than an increase in the first distance. Compared with the implementation in which the first image and the second image include different styles of a same trademark, when the first image and the second image include different trademarks, a difference between the trademarks included in the images is greater. Therefore, an increase in a distance between features during contrastive learning needs to be greater.

In a possible implementation, the first image and the second image include a same style of a same trademark, and the determining the loss based on the relationship between the first target feature representation and the second target feature representation includes: determining the loss through contrastive learning based on the relationship between the first target feature representation and the second target feature representation, where the loss is used to shorten a distance between the first target feature representation and the second target feature representation.

In a possible implementation, the first image and the second image are obtained by performing object detection on a raw image through a detection network and then cropping the raw image, the first image is an image from which the detection network is able to recognize a target, the second image is an image from which the detection network is unable to recognize the target, and the determining the loss based on the relationship between the first target feature representation and the second target feature representation includes: determining the loss through contrastive learning based on the relationship between the first target feature representation and the second target feature representation, where the loss is used to increase a distance between the first target feature representation and the second target feature representation.

In a possible implementation, the first image and the second image are obtained by performing object detection on a raw image through a detection network and then cropping the raw image, both the first image and the second image are images from which the detection network is unable to recognize a target, and the determining the loss based on the relationship between the first target feature representation and the second target feature representation includes: determining the loss through contrastive learning based on the relationship between the first target feature representation and the second target feature representation, where the loss is used to shorten a distance between the first target feature representation and the second target feature representation.

In this embodiment of this application, a multi-level contrastive loss function is designed, and contrastive learning loss functions are separately designed at different levels, to enhance discriminability between different levels; and contrastive learning is performed between a noise (negative) sample and a positive sample, to significantly alleviate a noise interference problem.

In a possible implementation, the first target feature representation and the second target feature representation are features mapped to hyperbolic space.

According to a third aspect, this application provides a data processing apparatus, including:

a processing module, configured to: obtain a first image, where the first image includes text;
process the first image through a first neural network, to obtain a first feature representation, where the first feature representation is an image feature of the first image;
process the first image through a second neural network, to obtain a second feature representation, where the second feature representation is a text feature of the text included in the first image;
perform fusion on the first feature representation and the second feature representation to obtain a first target feature representation; and
determine a category of the first image based on the first target feature representation.

In a possible implementation, the first image is a trademark, and the determining the category of the first image based on the first target feature representation includes:
determining a category of the trademark based on similarities between the first target feature representation and a plurality of preset feature representations, where each preset feature representation is obtained by performing feature extraction on a trademark of one category.

In a possible implementation, the processing module is further configured to perform dimension alignment between the second feature representation and the first feature representation; and
the processing module is specifically configured to perform fusion on the first feature representation and the second feature representation after the dimension alignment, to obtain the first target feature representation.

In a possible implementation, the first target feature representation and each preset feature representation are features mapped to hyperbolic space.

According to a fourth aspect, this application provides a data processing apparatus, including:

a processing module, configured to: obtain a first image and a second image, where the first image and the second image include text;
separately process the first image and the second image through a first neural network, to obtain a first feature representation and a second feature representation, where the first feature representation is an image feature of the first image, and the second feature representation is an image feature of the second image;
separately process the first image and the second image through a second neural network, to obtain a third feature representation and a fourth feature representation, where the first feature representation is a text feature of text included in the first image, and the second feature representation is a text feature of text included in the second image;
perform fusion on the first feature representation and the third feature representation to obtain a first target feature representation;
perform fusion on the second feature representation and the fourth feature representation to obtain a second target feature representation; and
determine a loss based on a relationship between the first target feature representation and the second target feature representation, and update the first neural network based on the loss.

In a possible implementation, the first image and the second image include a trademark.

In a possible implementation, the first image and the second image include different styles of a same trademark, and the processing module is specifically configured to:
determine the loss through contrastive learning based on the relationship between the first target feature representation and the second target feature representation, where the loss is used to increase a first distance between the first target feature representation and the second target feature representation.

In a possible implementation, the first image and the second image include different trademarks, and the processing module is specifically configured to:
determine the loss through contrastive learning based on the relationship between the first target feature representation and the second target feature representation, where the loss is used to increase a second distance between the first target feature representation and the second target feature representation, and an increase in the second distance is greater than an increase in the first distance.

In a possible implementation, the first image and the second image include a same style of a same trademark, and the processing module is specifically configured to:
determine the loss through contrastive learning based on the relationship between the first target feature representation and the second target feature representation, where the loss is used to shorten a distance between the first target feature representation and the second target feature representation.

In a possible implementation, the first image and the second image are obtained by performing object detection on a raw image through a detection network and then cropping the raw image, the first image is an image from which the detection network is able to recognize a target, and the second image is an image from which the detection network is unable to recognize the target; and

the processing module is specifically configured to:
determine the loss through contrastive learning based on the relationship between the first target feature representation and the second target feature representation, where the loss is used to increase a distance between the first target feature representation and the second target feature representation.

In a possible implementation, the first image and the second image are obtained by performing object detection on a raw image through a detection network and then cropping the raw image, both the first image and the second image are images from which the detection network is unable to recognize a target, and the processing module is specifically configured to:
determine the loss through contrastive learning based on the relationship between the first target feature representation and the second target feature representation, where the loss is used to shorten a distance between the first target feature representation and the second target feature representation.

In a possible implementation, the first target feature representation and the second target feature representation are features mapped to hyperbolic space.

According to a fifth aspect, an embodiment of this application provides a data processing apparatus. The apparatus may include a memory, a processor, and a bus system. The memory is configured to store a program. The processor is configured to execute the program in the memory, to perform the method according to any one of the first aspect or the optional implementations of the first aspect, and the method according to any one of the second aspect or the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, and the method according to any one of the second aspect or the optional implementations of the second aspect.

According to a seventh aspect, an embodiment of this application provides a computer program. When the computer program is run on a computer, the computer is enabled to perform the method according to any one of the first aspect or the optional implementations of the first aspect, and the method according to any one of the second aspect or the optional implementations of the second aspect.

According to an eighth aspect, this application provides a chip system. The chip system includes a processor, configured to support a data processing apparatus in implementing the functions in the foregoing aspects, for example, sending or processing data or information in the foregoing methods. In a possible design, the chip system further includes a memory. The memory is configured to store program instructions and data that are necessary for an execution device or a training device. The chip system may include a chip, or may include a chip and another discrete component.

BRIEF DESCRIPTION OF DRAWINGS

FIG. 1A is a diagram of a structure of a main framework of artificial intelligence;
FIG. 1B and FIG. 1C are diagrams of a framework of an application system according to this application;
FIG. 2 is a diagram of an optional hardware structure of a terminal;
FIG. 3 is a diagram of a structure of a server;
FIG. 4 is a diagram of a system architecture according to this application;
FIG. 5 shows a process of a cloud service;
FIG. 6 is a schematic flowchart of a data processing method according to an embodiment of this application;
FIG. 7 to FIG. 11A are schematic flowcharts of a data processing method according to an embodiment of this application;
FIG. 11B and FIG. 11C are diagrams of data distribution;
FIG. 11D is a schematic flowchart of a data processing method according to an embodiment of this application;
FIG. 11E is a diagram of data distribution;
FIG. 11F is a schematic flowchart of a data processing method according to an embodiment of this application;
FIG. 12 is a diagram of a structure of a data processing apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

DESCRIPTION OF EMBODIMENTS

The following describes embodiments of this application with reference to the accompanying drawings in embodiments of this application. Terms used in embodiments of this application are merely intended to describe specific embodiments of this application, but not to limit this application.

The following describes embodiments of this application with reference to the accompanying drawings. A person of ordinary skill in the art can know that the technical solutions provided in embodiments of this application are also applicable to similar technical problems with development of technologies and emergence of new scenarios.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, method, system, product, or device that includes a list of units is not necessarily limited to those units, but may include other units that are not expressly listed or are inherent to the process, method, product, or device.

The terms "substantially (substantially)", "about (about)", and the like used in this specification are approximation terms rather than degree terms, and are intended to take into account inherent deviations of measured values or calculated values that are known to a person of ordinary skill in the art. In addition, in descriptions of embodiments of this application, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

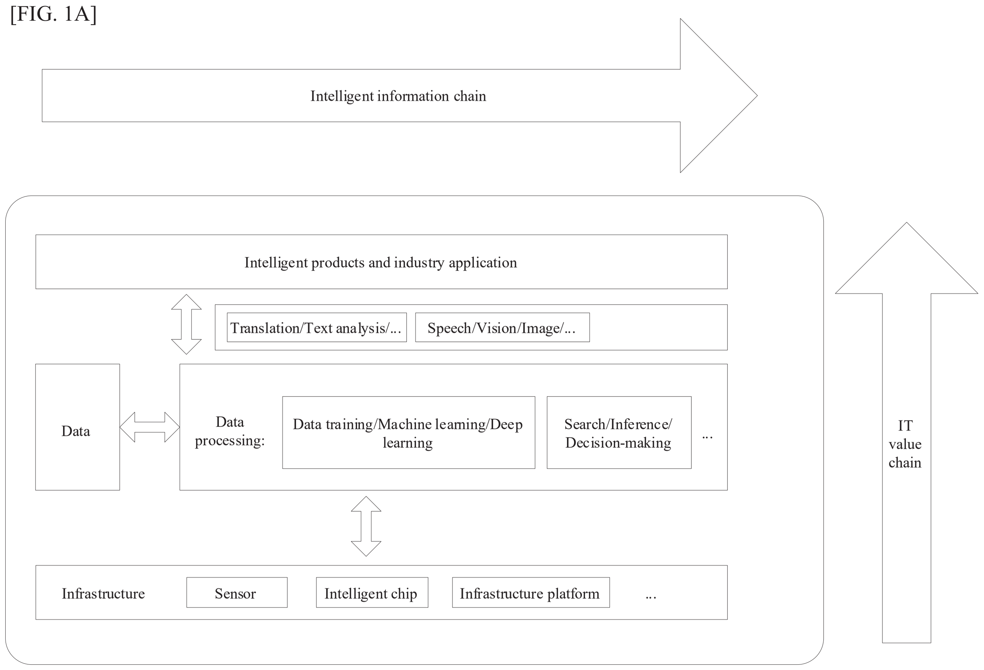

First, an overall operation process of an artificial intelligence system is described. FIG. 1A is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

(1) Infrastructure

The infrastructure provides computing capability support for the artificial intelligence system, implements communication with the outside world, and implements support through an infrastructure platform. Communication with the outside is performed through a sensor. A computing capability is provided by an intelligent chip (a hardware acceleration chip, for example, a CPU, an NPU, a GPU, an ASIC, or an FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computing.

(2) Data

Data at an upper layer of the infrastructure indicates a data source in the artificial intelligence field. The data relates to graphics, images, speech, and text, and further relates to internet of things data of conventional devices, including service data of an existing system and sensory data such as force, displacement, a liquid level, temperature, and humidity.

(3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent transportation, intelligent healthcare, autonomous driving, a smart city, and the like.

This application may be applied to the image processing field in the artificial intelligence field. Image processing is used below as an example to describe a plurality of application scenarios implemented in products.

Application scenarios of this application are first described.

This application may be applied to, but not limited to, an application with an image processing function (which may be referred to as an image processing application below), a cloud service provided by a cloud-side server, or the like. Descriptions are separately provided below.

1. Image processing application:

In embodiments of this application, a product form may be an image processing application, and in particular, may be a trademark recognition application. An application with a trademark recognition function may be run on a terminal device or a cloud-side server.

In a possible implementation, the trademark recognition application may implement a trademark recognition task based on an input image, or the like, to obtain a processing result. The processing result may be a trademark recognition result (for example, a cropped area of an area in which a trademark is located in the image, and a category of the trademark, for example, a manufacturer to which the trademark belongs).

In a possible implementation, a user may start an image processing application installed on a terminal device, and input an image. The image processing application may process the image according to a method provided in embodiments of this application, and present a processing result to the user (a presentation manner may be but is not limited to displaying, saving, or uploading to a cloud side).

In a possible implementation, a user may start an image processing application installed on a terminal device, and input an image. The image processing application may send the image to a cloud-side server. The cloud-side server processes the image according to a method provided in embodiments of this application, and sends a processing result back to the terminal device. The terminal device may present the processing result to the user (a presentation manner may be but is not limited to displaying, saving, uploading to a cloud side, or the like).

The following describes the image processing application in embodiments of this application separately from the perspective of a functional architecture and the perspective of a product architecture for implementing a function.

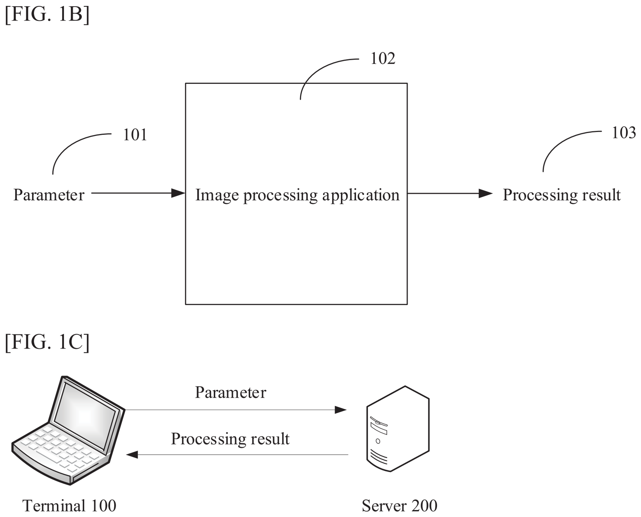

FIG. 1B is a diagram of a functional architecture of an image processing application according to an embodiment of this application.

In a possible implementation, as shown in FIG. 1B, the image processing application 102 may receive an input parameter 101 (for example, including an image) and generate a processing result 103. The image processing application 102 may be executed (for example) in at least one computer system, and includes computer code. When the computer code is executed by one or more computers, the computer is enabled to perform a method provided in embodiments of this application.

FIG. 1C is a diagram of an entity architecture for running an image processing application according to an embodiment of this application.

FIG. 1C is a diagram of an architecture of a system. The system may include a terminal 100 and a server 200. The server 200 may include one or more servers (in FIG. 1C, an example in which the server 200 includes one server is used for description), and the server 200 may provide, for one or more terminals, a method provided in embodiments of this application.

An image processing application may be installed on the terminal 100. The application and a web page may provide an interface. The terminal 100 may receive a related parameter input by a user on a trademark recognition interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

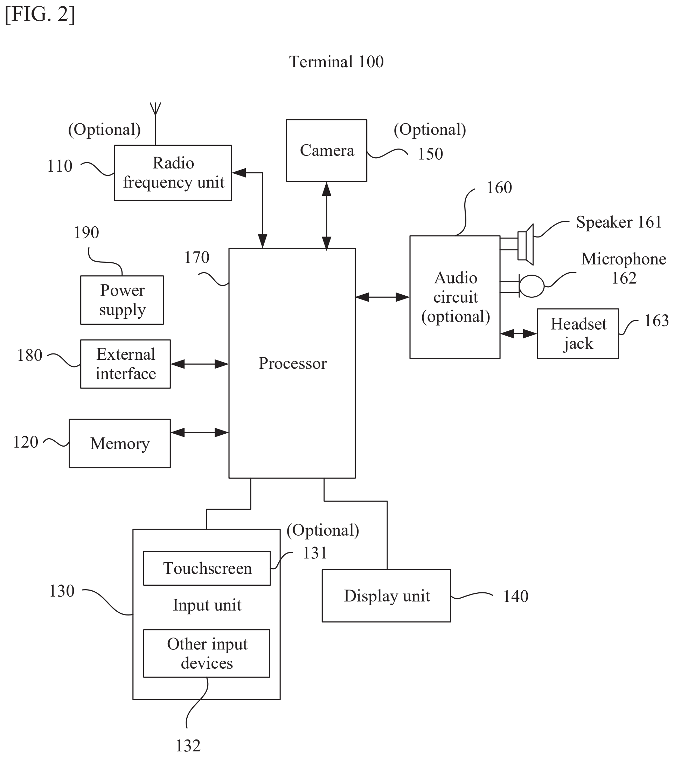

FIG. 2 is a diagram of an optional hardware structure of the terminal 100.

As shown in FIG. 2, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 2 is merely an example of the terminal or a multi-functional device but constitutes no limitation on the terminal or the multi-functional device. The terminal or the multi-functional device may include more or fewer components than those shown in the figure, or some components may be combined, or there may be different components.

The input unit 130 may be configured to receive input digital or character information, and generate a key signal input related to a user setting and function control of the portable multi-functional apparatus. Specifically, the input unit 130 may include a touchscreen 131 (optional) and/or other input devices 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may further include the other input devices. Specifically, the other input devices 132 may include but are not limited to one or more of the following: a physical keyboard, a functional key (for example, a volume control key or an on/off key), a trackball, a mouse, a joystick, and the like.

The input device 132 may receive an input image or the like.

The display unit 140 may be configured to display information input by the user, information provided for the user, various menus of the terminal 100, an interaction interface, a file, and/or playing of any multimedia file. In embodiments of this application, the display unit 140 may be configured to display an interface, a processing result, and the like of an image processing application.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide the following for the processor 170: managing hardware, software, and data resources on a computing processing device, and supporting control on software and an application. The memory 120 is further configured to store a multimedia file, and store a running program and an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It can be understood that the modem processor may alternatively not be integrated into the processor 170. In some embodiments, the processor and the memory may be implemented on a single chip. In other embodiments, the processor and the memory may alternatively be implemented on separate chips. The processor 170 may be further configured to: generate a corresponding operation control signal, send the operation control signal to a corresponding component in the computing processing device, and read and process data in software, especially, read and process the data and the program in the memory 120, to enable each functional module to perform a corresponding function, to control a corresponding component to perform an action according to a requirement of an instruction.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send an image to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 2.

The following describes a product form of the server 200 in FIG. 1C.

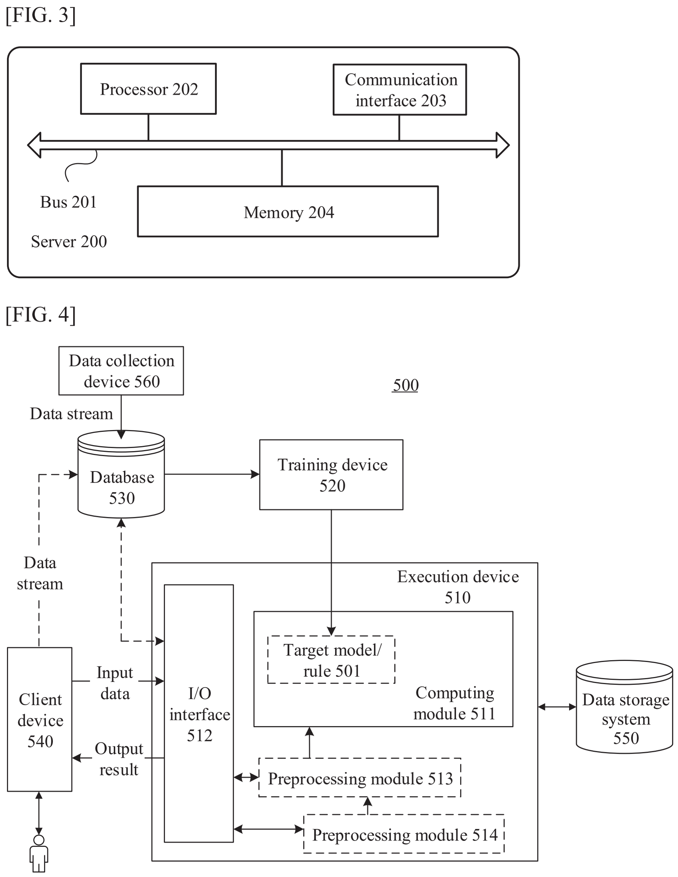

FIG. 3 is a diagram of a structure of the server 200. As shown in FIG. 3, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 3 for representation, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a data processing method. The processor 202 may perform steps of a data processing method of a chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that steps related to a model inference process in embodiments of this application relate to an AI-related operation. When the AI operation is performed, an instruction execution architecture of the terminal device and the server is not limited to the foregoing architecture in which the processor and the memory are combined. A system architecture provided in embodiments of this application is described below in detail with reference to FIG. 4.

FIG. 4 is a diagram of a system architecture according to an embodiment of this application. As shown in FIG. 4, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The execution device 510 may be the foregoing terminal device or server that runs the image processing application.

The data collection device 560 is configured to collect a training sample. The training sample may be a plurality of images or the like. After collecting the training sample, the data collection device 560 stores the training sample in the database 530.

The training device 520 may train a to-be-trained neural network (for example, a first neural network, a second neural network (optional), or a third neural network in embodiments of this application) based on the training sample maintained in the database 530, to obtain the target model/rule 501.

It should be understood that the training device 520 may perform a pre-training process on the to-be-trained neural network based on the training sample maintained in the database 530, or perform fine-tuning on a model based on pre-training.

It should be noted that, during actual application, the training sample maintained in the database 530 is not necessarily collected by the data collection device 560, and may alternatively be received from another device. In addition, it should be noted that the training device 520 does not necessarily obtain the target model/rule 501 through training completely based on the training sample maintained in the database 530, and may alternatively perform model training by obtaining a training sample from a cloud or another position. The foregoing descriptions should not be construed as a limitation on embodiments of this application.

The target model/rule 501 obtained through training by the training device 520 may be applied to different systems or devices, for example, applied to the execution device 510 shown in FIG. 4. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 4, the execution device 510 is provided with the input/output (input/output, I/O) interface 512, configured to exchange data with an external device. A user may input data (for example, an image in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, or the like in the data storage system 550 for corresponding processing, or may store data, instructions, or the like obtained through corresponding processing in the data storage system 550.

Finally, the I/O interface 512 provides a processing result for the client device 540, to provide the processing result for the user.

In the case shown in FIG. 4, the user may manually provide the input data, and "manually providing the input data" may be implemented through an operation on an interface provided by the I/O interface 512. In another case, the client device 540 may automatically send the input data to the I/O interface 512. If the client device 540 needs to automatically send the input data, authorization needs to be obtained from the user. In this case, the user may set a corresponding permission on the client device 540. The user may view, on the client device 540, a result output by the execution device 510. The result may be specifically presented in a manner of displaying, sound, an action, or the like. The client device 540 may alternatively serve as a data collection terminal, to collect the input data input to the I/O interface 512 and the output result output by the I/O interface 512 that are shown in the figure, and store the input data and the output result in the database 530 as new sample data. Certainly, the client device 540 may alternatively not perform collection, and the I/O interface 512 directly stores, in the database 530 as new sample data, the input data input to the I/O interface 512 and the output result output by the I/O interface 512 that are shown in the figure.

It should be noted that FIG. 4 is merely a diagram of a system architecture according to an embodiment of this application. A positional relationship between devices, components, modules, and the like shown in the figure does not constitute any limitation. For example, in FIG. 4, the data storage system 550 is an external memory relative to the execution device 510. In another case, the data storage system 550 may alternatively be deployed in the execution device 510. It should be understood that the execution device 510 may be deployed in the client device 540.

Details from the perspective of model inference are as follows:

In embodiments of this application, the computing module 511 in the execution device 510 may obtain the code stored in the data storage system 550, to implement steps related to a model inference process in embodiments of this application.

In embodiments of this application, the computing module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the computing module 511 in the execution device 510 may be a hardware system with an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the computing module 511 in the execution device 510. This is not limited herein.

Details from the perspective of model training are as follows:

In embodiments of this application, the training device 520 may obtain code stored in a memory (which is not shown in FIG. 4, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

2. Trademark recognition cloud service provided by a server:

In a possible implementation, the server may provide a trademark recognition service for a terminal side through an application programming interface (application programming interface, API).

A terminal device may send a related parameter (for example, an image) to the server through an API provided by a cloud. The server may obtain a processing result or the like based on the received parameter, and return the processing result to the terminal.

For descriptions of the terminal and the server, refer to the descriptions in the foregoing embodiments. Details are not described herein again.

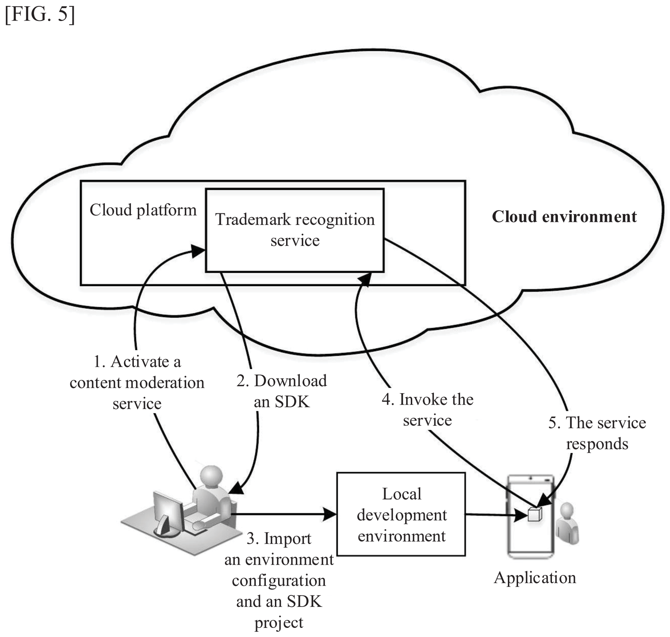

FIG. 5 shows a process of using a trademark recognition cloud service provided by a cloud platform.

1. Activate and purchase a content moderation service.

2. A user may download a software development kit (software development kit, SDK) corresponding to the content moderation service. Usually, the cloud platform provides SDKs of a plurality of development versions for the user to select according to a requirement of a development environment, for example, a Java-version SDK, a Python-version SDK, a PHP-version SDK, and an Android-version SDK.

3. The user downloads an SDK of a corresponding version locally as needed, imports an SDK project to a local development environment, and configures and debugs the SDK project in the local development environment. The local development environment may be further used for developing other functions, to form an application that integrates trademark recognition capabilities.

4. When a trademark recognition application needs to perform trademark recognition during use, an invocation of a trademark recognition API may be triggered. When an application triggers a trademark recognition function, an API request is initiated to a running instance of a trademark recognition service in a cloud environment. The API request carries an image. The running instance in the cloud environment processes the image to obtain a processing result.

5. The cloud environment returns the processing result to the application, to complete one invocation of a method provided in embodiments of this application.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}(x) = f(W^T x) = f(\sum_{s=1}^{n} W_s x_s + b)$$

s=1, 2, ..., or n, n is a natural number greater than 1, $W_s$ is a weight of $x_s$, and b is a bias of the neuron. f is an activation function (activation function) of the neuron, and is used to introduce a nonlinear characteristic into the neural network, to convert an input signal in the neuron into an output signal. The output signal of the activation function may serve as an input for a next convolutional layer, and the activation function may be a sigmoid function. The neural network is a network formed by connecting a plurality of individual neurons together. To be specific, an output of a neuron may be an input for another neuron. An input for each neuron may be connected to a local receptive field of a previous layer to extract a feature of the local receptive field. The local receptive field may be an area including several neurons.

(2) Deep neural network

The deep neural network (Deep Neural Network, DNN), also referred to as a multilayer neural network, may be understood as a neural network including many hidden layers. There is no special metric criterion for the "many" herein. The DNN is divided based on positions of different layers, and a neural network in the DNN may be divided into three types: an input layer, a hidden layer, and an output layer. Usually, the 1st layer is the input layer, the last layer is the output layer, and all intermediate layers are hidden layers. Layers are fully connected. To be specific, any neuron at an $i^{th}$ layer is necessarily connected to any neuron at an $(i+1)^{th}$ layer. Although the DNN seems complex, an operation at each layer is not complex, and is simply expressed by the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha(\ )$ is an activation function. At each layer, the output vector $\vec{y}$ is obtained merely by performing such a simple operation on the input vector $\vec{x}$. Because the DNN includes many layers, there are also a large quantity of coefficients W and offset vectors $\vec{b}$. These parameters in the DNN are defined as follows: The coefficient W is used as an example. It is assumed that, in a three-layer DNN, a linear coefficient from the $4^{th}$ neuron at the $2^{nd}$ layer to the $2^{nd}$ neuron at the $3^{rd}$ layer is defined as $w_{24}^{3}$. The superscript 3 indicates a layer at which the coefficient W is located, and the subscript corresponds to an output third-layer index 2 and an input second-layer index 4. To sum up, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the W parameter. In the deep neural network, a larger quantity of hidden layers enables the network to better describe a complex case in the real world. Theoretically, a model with more parameters has higher complexity and a larger "capacity". This means that the model can complete a more complex learning task. Training for the deep neural network is a process of learning a weight matrix, and a final objective of the training is to obtain a weight matrix (a weight matrix including vectors W of many layers) for all layers of a trained deep neural network.

(3) Back propagation algorithm

During training, a convolutional neural network may modify a value of a parameter in an initial super-resolution model by using an error back propagation (back propagation, BP) algorithm, so that a reconstruction error loss of the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

(4) Loss function

During training for a deep neural network, because an output of the deep neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before the 1st update, an initialization process is usually performed, to be specific, parameters are preconfigured for all layers of the deep neural network). For example, if the predicted value of the network is large, the weight vector is adjusted to decrease the predicted value, and adjustment is continuously performed until the deep neural network can obtain, through prediction, the target value that is actually expected or a value that is quite close to the target value that is actually expected. Therefore, "how to obtain, through comparison, a difference between a predicted value and a target value" needs to be predefined. This is the loss function (loss function) or an objective function (objective function). The loss function and the objective function are important equations for measuring a difference between a predicted value and a target value. The loss function is used as an example. A larger output value (loss) of the loss function indicates a greater difference. Therefore, training of a deep neural network is a process of minimizing the loss.

Trademark recognition is widely used in e-commerce and machine vision, and typical applications include copyright discrimination, brand recognition, product search and recommendation, and the like. Trademark recognition is widely used in many industrial vision scenarios, such as target customer recognition, hazardous chemical recognition, and product inspection.

In an existing object detection-based trademark recognition algorithm, all image areas that may be a target and that are detected from an input image by using an object extraction model are used as candidates; and then candidate areas are classified by using an image classification network, and a prediction that a target trademark exists is output, or a prediction that no trademark exists is output. However, in an existing image classification network, only an image feature is used for trademark recognition, leading to poor precision of trademark recognition.

To resolve the foregoing problems, embodiments of this application provide a data processing method. The following describes in detail the data processing method in embodiments of this application with reference to the accompanying drawings.

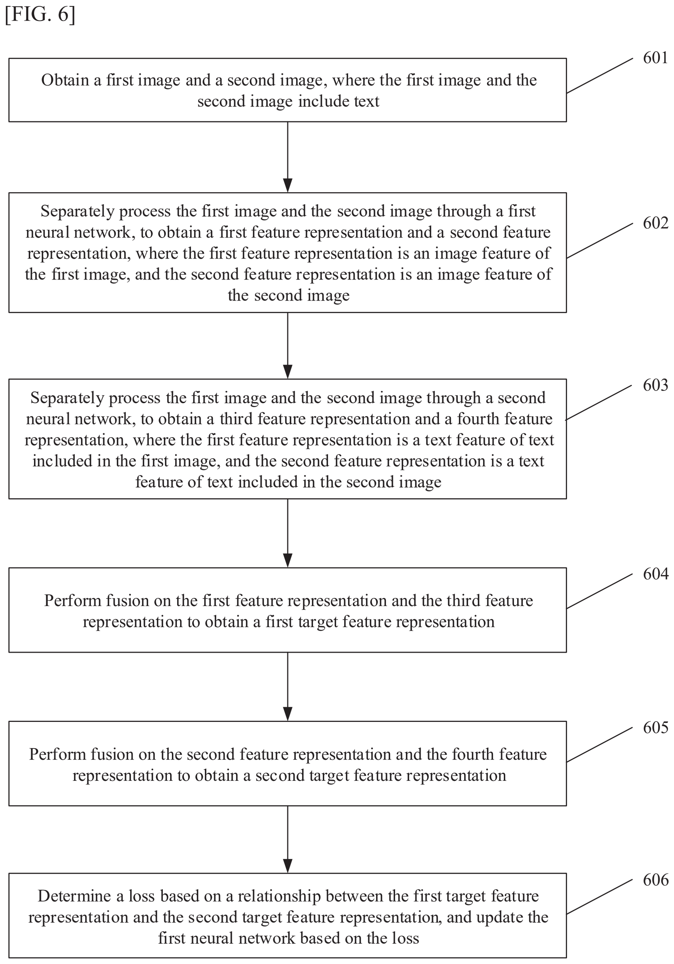

First, a trademark recognition method in embodiments of this application is described from the perspective of model training. FIG. 6 is a schematic flowchart of a data processing method according to an embodiment of this application. As shown in FIG. 6, the data processing method provided in this embodiment of this application may include steps 601 to 606. The following separately describes these steps in detail.

601: Obtain a first image and a second image, where the first image and the second image include text.

The first image and the second image may be training samples used for model training.

In a possible implementation, a model may be trained through contrastive learning. The first image and the second image may be positive samples, and a distance between features of the positive samples needs to be shortened during contrastive learning. Alternatively, the first image and the second image may be negative samples, and a distance between features of the negative samples needs to be shortened during contrastive learning.

The first image and the second image may be other images, for example, trademarks, that include text.

A trademark is used as an example. For example, when the first image and the second image are positive samples, the first image and the second image may include a same trademark or trademarks of similar styles.

For example, when the first image and the second image are negative samples, the first image and the second image may include different trademarks or trademarks of different styles.

It should be understood that the same trademark or the trademarks of similar styles herein may be trademarks that include same text and that have similar styles such as fonts, colors, and shapes of the text.

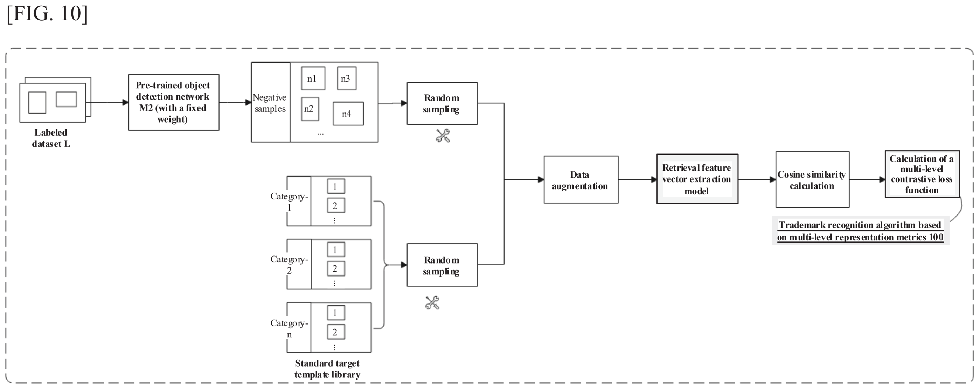

In a possible implementation, the first image or the second image may be an image corresponding to a trademark in a standard library, and the trademark in the standard library may be a labeled trademark. For example, as shown in FIG. 10, a standard target template library may include a plurality of categories of trademarks (for example, a category 1 and a category 2 shown in FIG. 10). Trademarks of a same category may alternatively be classified into trademarks (for example, 1 and 2 in each category shown in FIG. 10) of different styles. Whether a training sample determined from the standard library is a positive sample or a negative sample may be directly determined based on a label.

In a possible implementation, for an unlabeled image, an image area (for example, the first image or the second image in this embodiment of this application), in a raw image, that includes a trademark may be obtained through cropping by using a detection model. The detection model may recognize the image area and determine whether the trademark in the image area is a trademark of a recognizable category, but does not recognize a specific trademark category.

Images of trademarks of unrecognizable categories may be used as positive samples, and an image of a trademark of a recognizable category and an image of a trademark of an unrecognizable category may be used as negative samples.

The following describes a detection model training method.

Optionally, a trademark detection model may be trained by using labeled data. Optionally, to improve detection precision of the detection model, the trademark detection model may alternatively be trained based on both unlabeled data and labeled data.

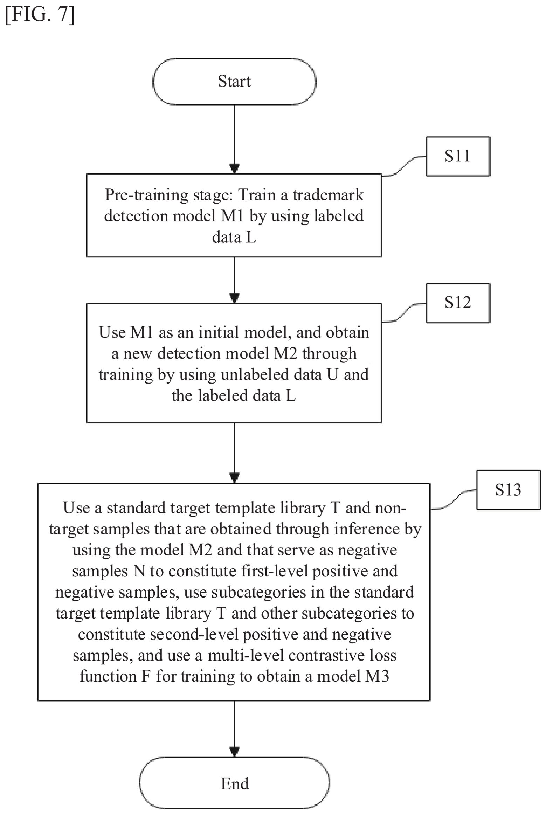

Steps S11 and S12 in FIG. 7 show a detection model training method.

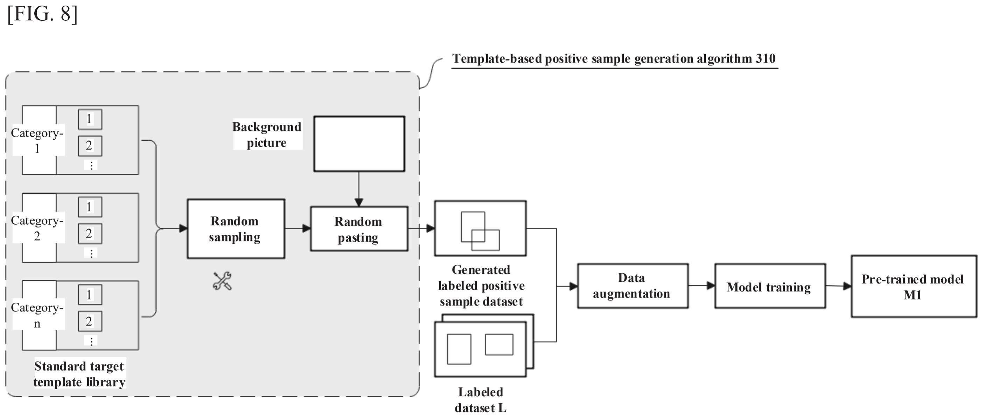

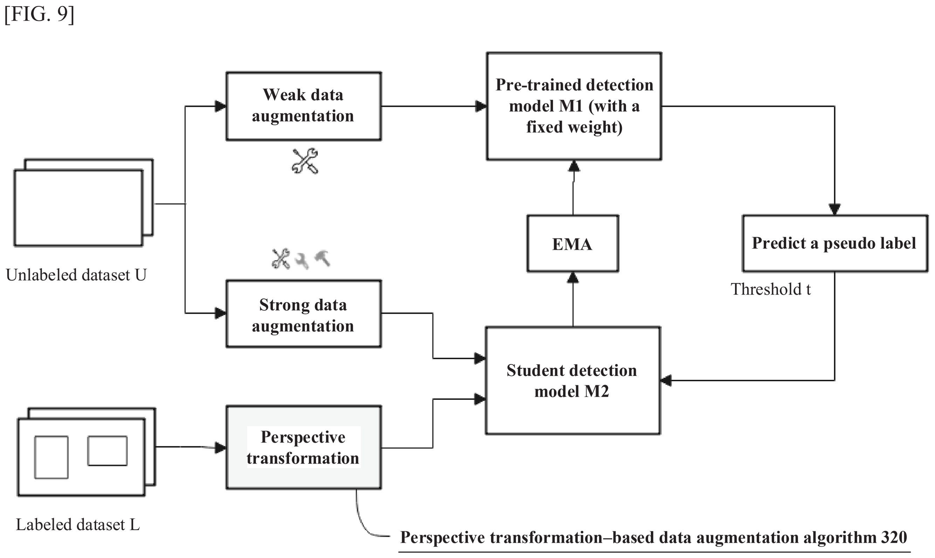

FIG. 7, FIG. 8, and FIG. 9 are diagrams of a detection model training method. Steps S11 and S12 in FIG. 7 are a detection model training process. FIG. 8 is a diagram of a pre-training stage. Specifically, a trademark detection model M1 may be trained by using labeled data L (step S11), M1 is used as an initial model, and as shown in FIG. 9, a detection model M2 may be obtained through training by using unlabeled data U and the labeled data L (step S12).

As shown in FIG. 8, an algorithm in the pre-training stage may include a template-based positive sample data generation algorithm 310, to train the model M1 together with the labeled data.

As shown in FIG. 9, the model M1 may be trained by using a semi-supervised object detection algorithm S12. Specifically, M1 may be used as an initial model, and a new detection model M2 may be obtained through training by using the unlabeled data U and the labeled data L. Optionally, a strong data augmentation operation and a weak data augmentation operation may be separately performed on the unlabeled data U (a data augmentation manner is not limited in this embodiment of this application, and a degree of enhancing an image by the strong data augmentation is higher than a degree of enhancing an image by the weak data augmentation), and perspective transformation (which may also be referred to as affine transformation) data augmentation may be performed on the labeled dataset L, to enable a standard trademark graphic to adapt to an image shooting angle of a background. Then an output of M1 is used as a pseudo label to train the model M2. M2 may serve as a detection model to process the raw image, to obtain the first image and the second image.

In this embodiment of this application, a semi-supervised trademark detection algorithm for unlabeled data is used, and data generation operations, such as random mixing and random pasting, are performed on trademarks in a priori template library, to increase a quantity of positive samples. In addition, a scene distribution-based perspective data augmentation solution is proposed, and the perspective transformation data augmentation is introduced, to increase sample diversity and enhance model robustness.

In addition, the first image and the second image may alternatively be images obtained through specific data augmentation.

In addition, the first image and the second image may alternatively be obtained through random sampling from the standard library and images obtained by the detection model.

602: Separately process the first image and the second image through a first neural network, to obtain a first feature representation and a second feature representation, where the first feature representation is an image feature of the first image, and the second feature representation is an image feature of the second image.

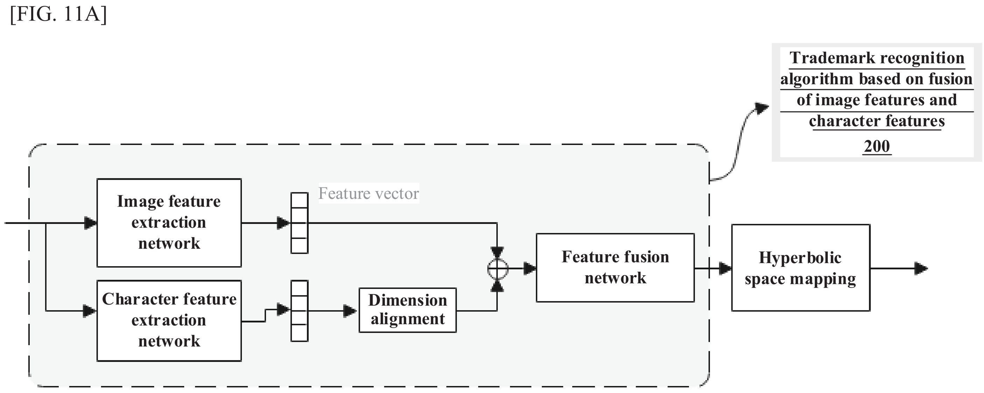

In a possible implementation, the first image and the second image may be processed through the first neural network to obtain image feature representations (to be specific, the first feature representation and the second feature representation in this embodiment of this application). The first neural network may be a to-be-trained neural network in this embodiment of this application. For example, as shown in FIG. 10, a retrieval feature vector extraction model in FIG. 10 may perform step 602. Specifically, as shown in FIG. 11A, an image feature extraction network in FIG. 11A may be the first neural network in this embodiment of this application.

603: Separately process the first image and the second image through a second neural network, to obtain a third feature representation and a fourth feature representation, where the first feature representation is a text feature of text included in the first image, and the second feature representation is a text feature of text included in the second image.

In a possible implementation, the second neural network may extract a text feature (which may also be referred to as a character feature) from an image. For example, the second neural network may be an optical character recognition (optical character recognition, OCR) network (or a part of an OCR, for example, a feature extraction network in the OCR).

In a possible implementation, the first image and the second image may be separately processed through the second neural network, to obtain the third feature representation and the fourth feature representation.

The second neural network may be a pre-trained model.

604: Perform fusion on the first feature representation and the third feature representation to obtain a first target feature representation.

605: Perform fusion on the second feature representation and the fourth feature representation to obtain a second target feature representation.

In a possible implementation, dimension alignment may be performed on the first feature representation and the third feature representation (sizes of the feature representations are adjusted to be consistent, for example, this may be implemented by using a neural network (which may include, for example, a linear operation and a feedforward FC layer)), and fusion is performed on the first feature representation and the third feature representation after the dimension alignment, to obtain the first target feature representation.

In a possible implementation, dimension alignment may be performed on the second feature representation and the fourth feature representation (sizes of the feature representations are adjusted to be consistent, for example, this may be implemented by using a neural network (which may include, for example, a linear operation and a feedforward FC layer)), and fusion is performed on the second feature representation and the fourth feature representation after the dimension alignment, to obtain the second target feature representation.

It should be understood that an alignment operation object of the dimension alignment may be one of an image or a text branch. For example, a dimension of the third feature representation may be adjusted, to enable a size of an adjusted third feature representation to be consistent with a size of a dimension of the first feature representation.

In a possible implementation, the first target feature representation and the second target feature representation may be features mapped to hyperbolic space. Hyperbolic metric space may adapt to multi-level data structures.

In an implementation, data in the hyperbolic space may be expressed based on a conformal model. The conformal model indicates that the hyperbolic space is mapped to Euclidean space through conformal mapping (conformal mapping). For example, the conformal model may be a Poincare model (Poincare Model), a hyperboloid model (Hyperboloid Model), or a Klein model. The conformal model may be used to describe the hyperbolic space, and defines a series of vector algebraic transformations and geometric constraints of hyperbolic gyroscopic vector space.

606: Determine a loss based on a relationship between the first target feature representation and the second target feature representation, and update the first neural network based on the loss.

In a possible implementation, the first image and the second image include different styles of a same trademark, and the first image and the second image may be used as negative samples. Therefore, the loss may be determined through contrastive learning based on the relationship between the first target feature representation and the second target feature representation, where the loss is used to increase a first distance between the first target feature representation and the second target feature representation.

In a possible implementation, the first image and the second image include different trademarks, and the first image and the second image may be used as negative samples. Therefore, the loss may be determined through contrastive learning based on the relationship between the first target feature representation and the second target feature representation, where the loss is used to increase a second distance between the first target feature representation and the second target feature representation, and an increase in the second distance is greater than an increase in the first distance. Compared with the implementation in which the first image and the second image include different styles of a same trademark, when the first image and the second image include different trademarks, a difference between the trademarks included in the images is greater. Therefore, an increase in a distance between features during contrastive learning needs to be greater.

It should be understood that the first distance and the second distance herein may be understood as different distance calculation results obtained by using a same (or different) distance calculation method(s).

In a possible implementation, the first image and the second image include a same style of a same trademark, and the first image and the second image may be used as negative samples. Therefore, the loss may be determined through contrastive learning based on the relationship between the first target feature representation and the second target feature representation, where the loss is used to shorten a distance between the first target feature representation and the second target feature representation.

In a possible implementation, the first image and the second image are obtained by performing object detection on a raw image through a detection network (for example, the model M2 described in the foregoing embodiments) and then cropping the raw image, the first image is an image from which the detection network is able to recognize a target, the second image is an image from which the detection network is unable to recognize the target, and the first image and the second image may be used as negative samples. Therefore, the loss may be determined through contrastive learning based on the relationship between the first target feature representation and the second target feature representation, where the loss is used to increase a distance between the first target feature representation and the second target feature representation.

In a possible implementation, the first image and the second image are obtained by performing object detection on a raw image through a detection network and then cropping the raw image, both the first image and the second image are images from which the detection network is unable to recognize a target, and the first image and the second image may be used as negative samples. Therefore, the loss may be determined through contrastive learning based on the relationship between the first target feature representation and the second target feature representation, where the loss is used to shorten a distance between the first target feature representation and the second target feature representation.

For example, as shown in FIG. 10, a non-target sample obtained through inference by using the model M2 may be used as a negative sample N, to constitute first-level positive and negative samples; subcategories in the standard target template library T and other subcategories are used to constitute second-level positive and negative samples; and a contrastive loss function F is used to train a model (for example, the image feature extraction network shown in FIG. 11A may be updated).

The following describes an example of calculating a loss in contrastive learning.

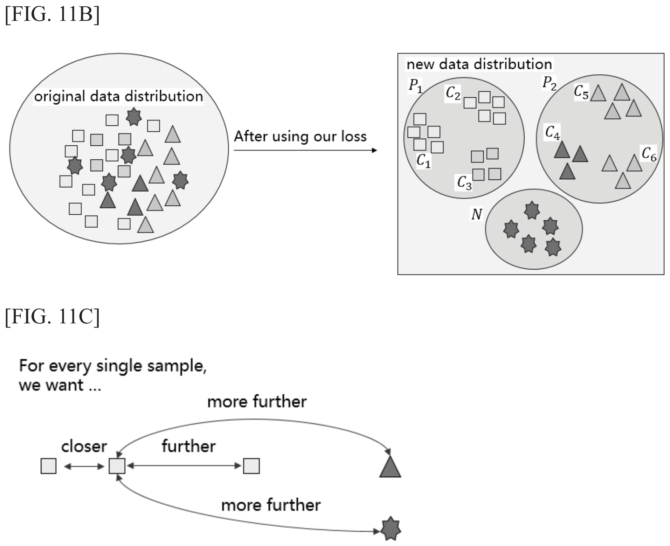

FIG. 11B is a diagram of calculating a contrastive loss (loss). In FIG. 11B, original data distribution is shown on the left, and new data distribution obtained through a constraint of the contrastive loss function is shown on the right. A calculation process is as follows: Distances between each sample and negative samples at different levels are calculated (for example, refer to FIG. 11C and the following formula):

$$Loss = l_1 + l_2 + l_3 + l_4$$
$$= -\lambda_1 \, sim(C_i, \, C'_i) + \lambda_2 \sum_{j \in P_1, \, j \neq i} sim(C_i, \, C_j) + \lambda_3 \sum_{k \in P_2} sim(C_i, \, C_k)$$
$$+ \lambda_4 \sum_{n \in N} sim(C_i, C_n)$$

$\lambda_i$ indicates a constant coefficient between terms, $C_i$ indicates a sample of a category $P_1$, $C_i'$ indicates another sample of a same category as the category of $C_i$, $C_j$ indicates another subcategory of the same category $P_1$, $C_k$ and $C_n$ indicate samples of different categories $P_2$ and $P_3$, and sim may use different distance metric manners.

As shown in FIG. 11B, $P_1$ may be samples including a same trademark, $C_1$, $C_2$, and $C_3$ may be samples including different styles of a same trademark, $P_2$ may be samples including a same trademark, $C_4$, $C_5$, and $C_6$ may be different styles of a same trademark, and N may be a sample including a trademark whose category cannot be recognized by the detection model.

Optionally, a distance metric manner of hyperbolic sine space may be used:

$$sim(C_i, C_j) = -D(C_i, C_j) = \frac{2}{\sqrt{c}} arctan\left(\sqrt{c} \, \| -x \oplus y \| \right)$$

In this embodiment of this application, a multi-level contrastive loss function is designed, and contrastive learning loss functions are separately designed at different levels, to enhance discriminability between different levels; and contrastive learning is performed between a noise (negative) sample and a positive sample, to significantly alleviate a noise interference problem.

An embodiment of this application provides a data processing method, including: obtaining a first image and a second image, where the first image and the second image include a trademark; separately processing the first image and the second image through a first neural network, to obtain a first feature representation and a second feature representation, where the first feature representation is an image feature of the first image, and the second feature representation is an image feature of the second image; separately processing the first image and the second image through a second neural network, to obtain a third feature representation and a fourth feature representation, where the first feature representation is a text feature of text included in the first image, and the second feature representation is a text feature of text included in the second image; performing fusion on the first feature representation and the third feature representation to obtain a first target feature representation; performing fusion on the second feature representation and the fourth feature representation to obtain a second target feature representation; and determining a loss based on a relationship between the first target feature representation and the second target feature representation, and updating the first neural network based on the loss. In the foregoing manner, both an image feature of the trademark and a text feature of the trademark are extracted, fusion is performed on the image feature and the text feature, and a model is updated by using a feature representation obtained through fusion, to improve trademark recognition precision of a trained model.

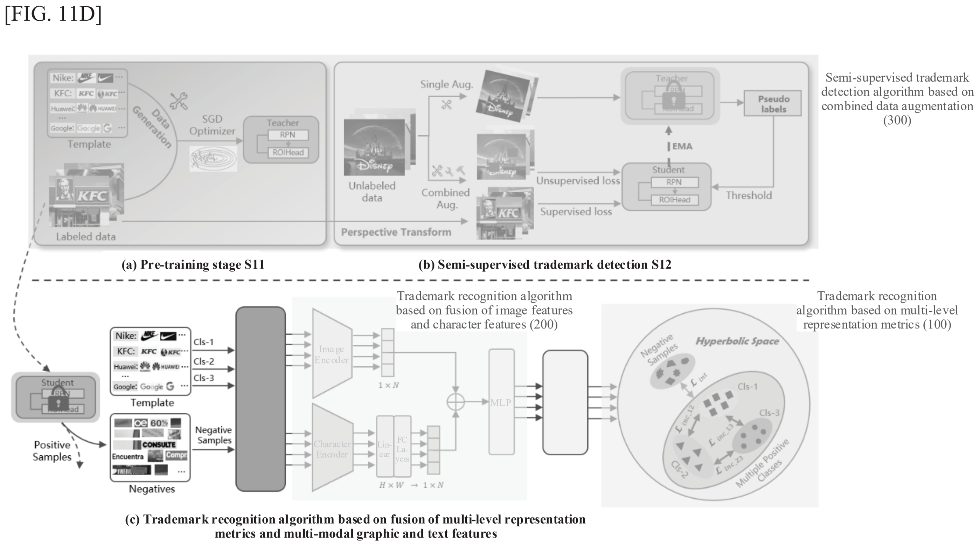

FIG. 11D is a diagram of an application process according to an embodiment of this application. The process includes three sub-algorithms: (1) A semi-supervised trademark detection and trademark recognition algorithm based on combined data augmentation 100: First, a teacher model is trained by using some labeled data and a trademark template library in a supervised manner. Then a new student model is obtained through training by using unlabeled data and a pre-trained teacher model in combination with a semi-supervised learning algorithm that is based on perspective transformation data augmentation. (2) A trademark recognition algorithm based on fusion of image features and character features 200: A standard trademark template library and non-target samples obtained through inference by using the student model are used to constitute first-level positive and negative samples. Subcategories in the template library constitute second-level positive and negative samples. After the samples undergo a same data augmentation algorithm, features of the samples are extracted by using an image feature extractor and a character feature extractor. After undergoing feature vector dimension alignment, the features are sent to a feature fusion MLP. (3) A trademark recognition algorithm based on multi-level representation metrics 300: An output feature vector is mapped to hyperbolic metric space through an exponential mapping algorithm. In the hyperbolic metric space, a multi-level loss function is calculated based on a multi-scale label of a sample. For a calculation manner, refer to the following example:

$$l_{i,j,n} = -\log \frac{\exp(-D(i,j)/\tau)}{\sum\limits_{k}^{K} \exp(-D(i,k)/\tau)} - \lambda_1 \log \frac{\exp(-D(i,j)/\tau)}{\sum\limits_{n}^{N} \exp(-D(i,n)/\tau)} - \lambda_2 \log \frac{\exp(-D(i,j)/\tau)}{\sum\limits_{m}^{M} \exp(-D(i,m)/\tau)} - \ldots$$

D indicates a distance metric method. Optionally, a cosine distance may be used. $l_{i,j,n}$ indicates that an $i^{th}$ sample and a $j^{th}$ sample are at n levels.

Table 1 shows comparison between performance of the method provided in embodiments of this application and performance of the conventional technology with respect to service data. Table 2 shows comparison between performance of the method provided in embodiments of this application and performance of the conventional technology with respect to service data. Table 3 shows example results of an ablation study.

Table 1

| Methods | Precision | Recall | F1-Score |
|---|---|---|---|
| Baseline (YOLOv5) | 0.412 | 0.596 | 0.487 |
| PSGT. & Data Aug. (CVPR 2019) | 0.419 (+0.7%) | 0.621 (+2.5%) | 0.500 (+1.3%) |
| Combined Aug. | 0.427 (+1.5%) | 0.623 (+2.7%) | 0.507 (+2%) |
| STAC (CVPR 2020) | 0.424 (+1.2%) | 0.609 (+1.3%) | 0.500 (+1.3%) |
| CDA SSOD (Ours) | 0.45 (+3.8%) | 0.636 (+4%) | 0.527 (+4%) |

Table 2

| Methods | Precision | Recall | F1-Score |
|---|---|---|---|
| Baseline (SIFT) | 0.33 | 0.85 | 0.59 |
| N-pair Euclidean (NIPS 2016) | 0.66 (+33%) | 0.65 (-20%) | 0.65 (+6%) |
| ProxyNCA-Euclidean (CVPR 2020) | 0.68 (+35%) | 0.85 (+0%) | 0.76 (+17%) |
| N-pair-Cosine (NIPS 2016) | 0.61 (+28%) | 0.83 (-2%) | 0.70 (+11%) |
| ProxyNCA-Cosine (CVPR 2020) | 0.66 (+33%) | 0.87 (+2%) | 0.75 (+16%) |
| Hyper-ViT (CVPR 2022) | 0.81 (+48%) | 0.87 (+2%) | 0.84 (+25%) |
| MLCL-MMFF (Ours) | 0.85 (+52%) | 0.91 (+6%) | 0.88 (+29%) |

As shown in Table 1 and Table 2, in the method provided in embodiments of this application, a recall (recall) is increased by 4% compared with a solution in which only a part of labeled data is used, and a recall is increased by 2.6% compared with a SOTA semi-supervised solution in the industry; and in the method provided in embodiments of this application, precision is increased by 52% and a recall is increased by 6% compared with a conventional CV operator, and precision is increased by 4% and a recall is increased by 4% compared with a SOTA metric learning algorithm in the industry.

Table 3 Ablation study for logo matching

| Algorithm | MLCL | MMFF | Precision | Recall | F1-Score |
|---|---|---|---|---|---|
| Ours wo MLCL+MMFF | | | 0.810 | 0.87 | 0.84 |
| Ours wo MMFF | √ | | 0.825 | 0.90 | 0.86 |
| Ours wo MLCL | | √ | 0.835 | 0.90 | 0.87 |

(continued)

| Algorithm | MLCL | MMFF | Precision | Recall | F1-Score |
|-----------|------|------|-----------|--------|----------|
| Ours | √ | √ | 0.85 | 0.91 | 0.88 |

The MLCL stands for multi-level contrastive learning, and the MMFF stands for multi-modality feature fusion.

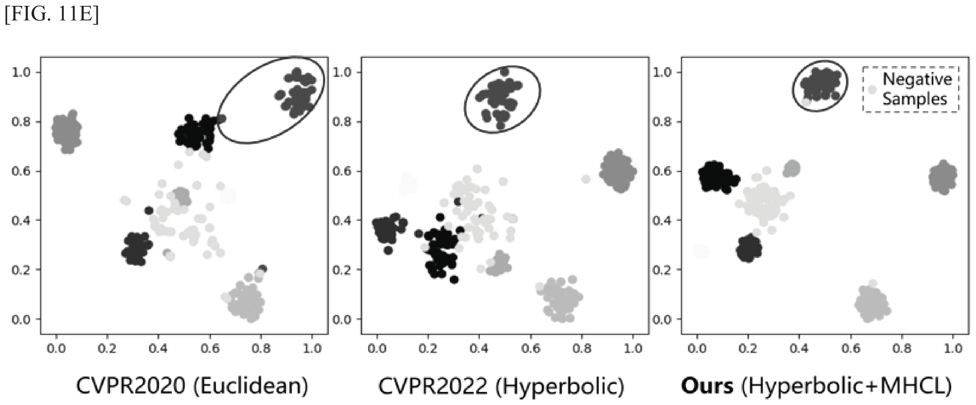

FIG. 11E shows comparison between feature maps. A multi-level representation metric may aggregate subcategory features, and increase a distance between a subcategory feature and a noise sample.

It can be concluded from Table 3 that multi-level metric learning plays an important role in performance improvement. Compared with single-level metric learning, in the multi-level metric learning, precision is increased by 1.5%, and a recall is increased by 1%. As shown in FIG. 11E, noise data is likely to be confused with a positive sample, leading to mis-recognition. In the multi-level metric learning, contrastive learning is performed between all positive samples and noise that is used as a negative sample. It can be learned from a diagram on the right in FIG. 11E that negative samples are well aggregated, an intra-category distance between positive samples is shortened, an inter-category distance is increased, so that discriminability is improved.

In addition, from the perspective of model inference, an embodiment of this application further provides a data processing method, including: obtaining a first image, where the first image includes text; processing the image through a first neural network (for example, a trained first neural network obtained according to the embodiment corresponding to FIG. 6), to obtain a first feature representation, where the first feature representation is an image feature of the first image; processing the image through a second neural network (for example, the second neural network in the embodiment corresponding to FIG. 6), to obtain a second feature representation, where the second feature representation is a text feature of the text included in the first image; performing fusion on the first feature representation and the second feature representation to obtain a first target feature representation; and determining a category of the first image based on the first target feature representation and similarities between the first target feature representation and a plurality of preset feature representations.

In a possible implementation, the first image is a trademark. For example, a category of the trademark may be determined based on similarities between the first target feature representation and a plurality of preset feature representations, where each preset feature representation is obtained by performing feature extraction on a trademark of one category.

A similarity calculation method herein is not limited in this application.

In a possible implementation, dimension alignment may be further performed on the second feature representation and the first feature representation; and fusion may be performed on the first feature representation and the second feature representation after the dimension alignment, to obtain the first target feature representation.

In a possible implementation, the first target feature representation and each preset feature representation are features mapped to hyperbolic space.

Feature extraction in the method on the inference side is similar to that on the training side. Refer to the descriptions in the embodiment corresponding to FIG. 6. Similar parts are not described again.

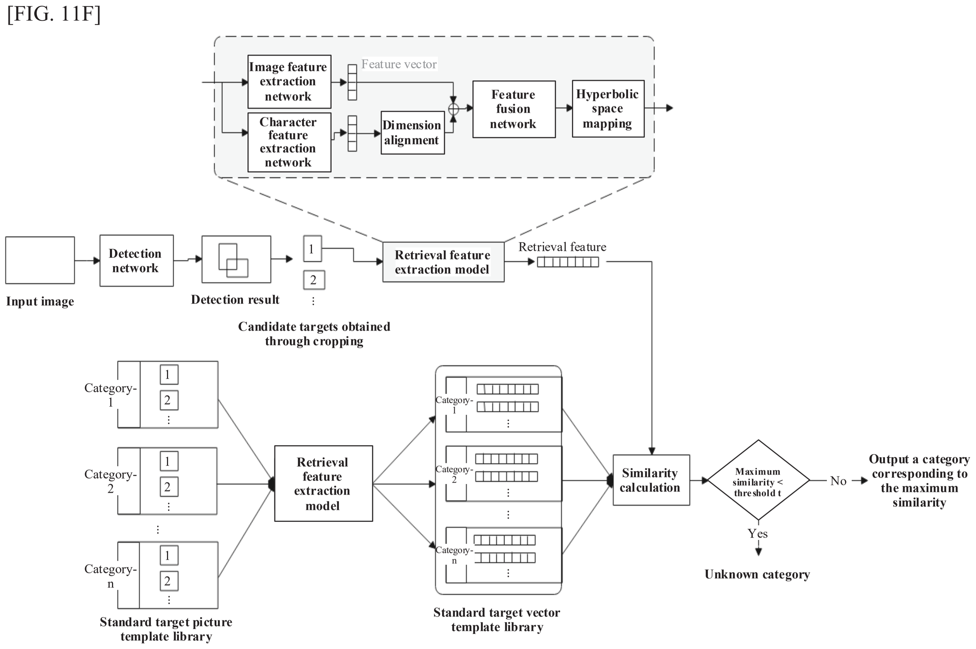

FIG. 11F is a diagram of a framework on an inference side according to an embodiment of this application. The framework mainly includes three parts: (1) Detect a candidate target by using an object detection network. (2) Extract a feature as a retrieval feature vector by using the retrieval feature extraction module (mainly including image feature and text feature extraction, fusion, and spatial transformation) designed in embodiments of this application. (3) Perform retrieval in a standard target feature vector library by using the feature vector; calculate a similarity between the feature vector and a standard target vector in the library; and if a maximum similarity is less than a threshold t, output an unknown category; or otherwise, output a category corresponding to the maximum similarity.

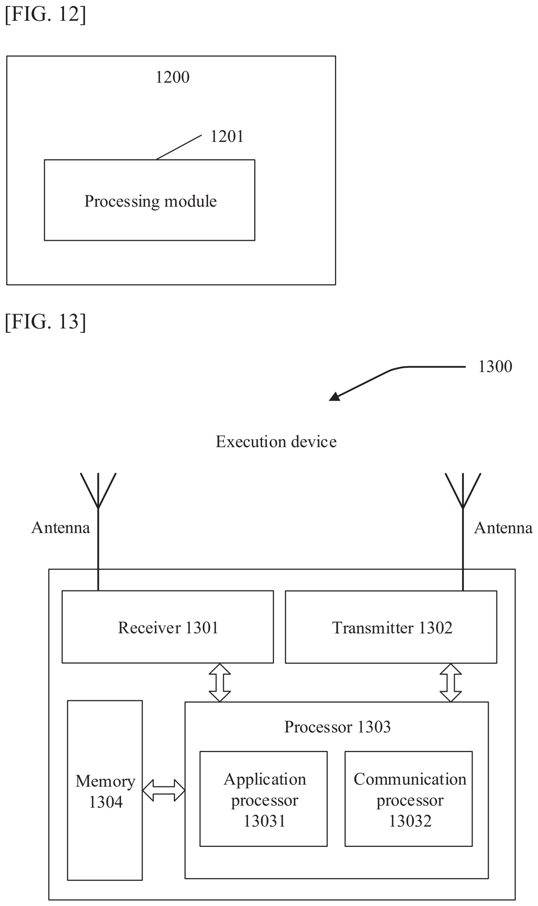

FIG. 12 is a diagram of a structure of a data processing apparatus according to an embodiment of this application. As shown in FIG. 12, the data processing apparatus 1200 provided in this embodiment of this application includes:

a processing module 1201, configured to: obtain a first image and a second image, where the first image and the second image include text;

separately process the first image and the second image through a first neural network, to obtain a first feature representation and a second feature representation, where the first feature representation is an image feature of the first image, and the second feature representation is an image feature of the second image;

separately process the first image and the second image through a second neural network, to obtain a third feature representation and a fourth feature representation, where the first feature representation is a text feature of text included in the first image, and the second feature representation is a text feature of text included in the second image;

perform fusion on the first feature representation and the third feature representation to obtain a first target feature representation;

perform fusion on the second feature representation and the fourth feature representation to obtain a second target feature representation; and

determine a loss based on a relationship between the first target feature representation and the second target feature representation, and update the first neural network based on the loss.

For specific descriptions of the processing module 1201, refer to the descriptions of steps 601 to 606 in the foregoing embodiments. Details are not described herein again.

In a possible implementation, the first image and the second image are trademarks.

In a possible implementation, the first image and the second image include different styles of a same trademark, and the processing module is specifically configured to:

determine the loss through contrastive learning based on the relationship between the first target feature representation and the second target feature representation, where the loss is used to increase a first distance between the first target feature representation and the second target feature representation.

In a possible implementation, the first image and the second image include different trademarks, and the processing module is specifically configured to:

determine the loss through contrastive learning based on the relationship between the first target feature representation and the second target feature representation, where the loss is used to increase a second distance between the first target feature representation and the second target feature representation, and an increase in the second distance is greater than an increase in the first distance.

In a possible implementation, the first image and the second image include a same style of a same trademark, and the processing module is specifically configured to:

determine the loss through contrastive learning based on the relationship between the first target feature representation and the second target feature representation, where the loss is used to shorten a distance between the first target feature representation and the second target feature representation.

In a possible implementation, the first image and the second image are obtained by performing object detection on a raw image through a detection network and then cropping the raw image, the first image is an image from which the detection network is able to recognize a target, and the second image is an image from which the detection network is unable to recognize the target; and

the processing module is specifically configured to:

determine the loss through contrastive learning based on the relationship between the first target feature representation and the second target feature representation, where the loss is used to increase a distance between the first target feature representation and the second target feature representation.

In a possible implementation, the first image and the second image are obtained by performing object detection on a raw image through a detection network and then cropping the raw image, both the first image and the second image are images from which the detection network is unable to recognize a target, and the processing module is specifically configured to:

determine the loss through contrastive learning based on the relationship between the first target feature representation and the second target feature representation, where the loss is used to shorten a distance between the first target feature representation and the second target feature representation.

In a possible implementation, the first target feature representation and the second target feature representation are features mapped to hyperbolic space.

In addition, an embodiment of this application further provides a data processing apparatus, including:

a processing module, configured to: obtain a first image, where the first image includes text;

process the first image through a first neural network, to obtain a first feature representation, where the first feature representation is an image feature of the first image;

process the first image through a second neural network, to obtain a second feature representation, where the second feature representation is a text feature of the text included in the first image;

perform fusion on the first feature representation and the second feature representation to obtain a first target feature representation; and

determine a category of the first image based on the first target feature representation.

In a possible implementation, the first image is a trademark, and the determining the category of the first image based on the first target feature representation includes:

determining a category of the trademark based on similarities between the first target feature representation and a plurality of preset feature representations, where each preset feature representation is obtained by performing feature extraction on a trademark of one category.

In a possible implementation, the processing module is further configured to perform dimension alignment between the second feature representation and the first feature representation; and
the processing module is specifically configured to perform fusion on the first feature representation and the second feature representation after the dimension alignment, to obtain the first target feature representation.

In a possible implementation, the first target feature representation and each preset feature representation are features mapped to hyperbolic space.

The following describes an execution device provided in embodiments of this application. FIG. 13 is a diagram of a structure of an execution device according to an embodiment of this application. The execution device 1300 may be specifically a virtual reality VR device, a mobile phone, a tablet computer, a notebook computer, an intelligent wearable device, a monitoring data processing device, a server, or the like. This is not limited herein. Specifically, the execution device 1300 includes a receiver 1301, a transmitter 1302, a processor 1303 (there may be one or more processors 1303 in the execution device 1300, and one processor is used as an example in FIG. 13), and a memory 1304. The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores processor and operation instructions, an executable module, or a data structure, or a subset thereof, or an extended set thereof. The operation instructions may include various operation instructions for implementing various operations.

The processor 1303 controls an operation of the execution device. During specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 1303 or implemented by the processor 1303. The processor 1303 may be an integrated circuit chip and has a signal processing capability. During implementation, the steps of the foregoing methods may be performed by a hardware integrated logic circuit in the processor 1303 or by using instructions in a form of software. The processor 1303 may be a general-purpose processor, a digital signal processor (digital signal processor, DSP), a microprocessor, or a microcontroller. The processor 1303 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1303 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1304, and the processor 1303 reads information in the memory 1304 and performs the steps related to the model inference process in the foregoing methods in combination with hardware of the processor 1303.

The receiver 1301 may be configured to receive input digit or character information, and generate a signal input related to a related setting and function control of the execution device. The transmitter 1302 may be configured to output digit or character information through a first interface. The transmitter 1302 may be further configured to send instructions to a disk group through the first interface, to modify data in the disk group. The transmitter 1302 may further include a display device, for example, a display.

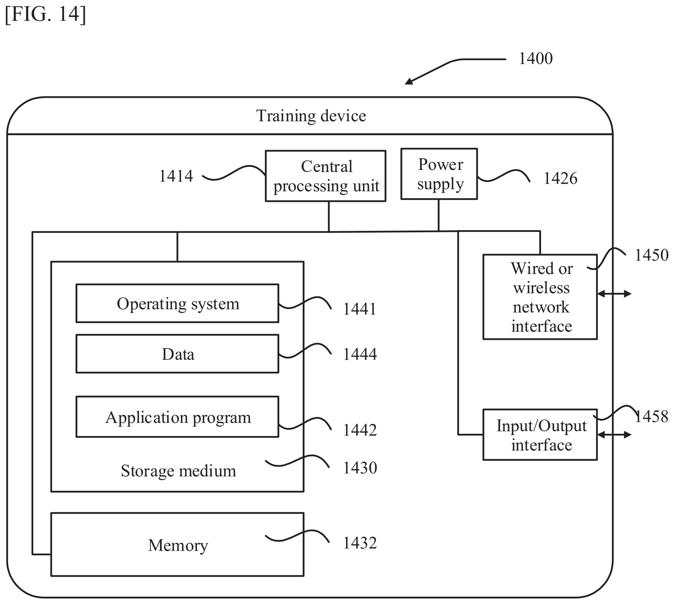

An embodiment of this application further provides a training device. FIG. 14 is a diagram of a structure of a training device according to an embodiment of this application. Specifically, the training device 1400 is implemented by one or more servers. The training device 1400 may vary greatly due to different configurations or performance, and may include one or more central processing units (central processing units, CPU) 1414 (for example, one or more processors), a memory 1432, and one or more storage media 1430 (for example, one or more mass storage devices) for storing an application program 1442 or data 1444. The memory 1432 and the storage medium 1430 may perform transient storage or persistent storage. A program stored in the storage medium 1430 may include one or more modules (not shown in the figure), and each module may include a series of instruction operations for the training device. Further, the central processing unit 1414 may be configured to communicate with the storage medium 1430, and perform, on the training device 1400, a series of instruction operations in the storage medium 1430.

The training device 1400 may further include one or more power supplies 1426, one or more wired or wireless network interfaces 1450, one or more input/output interfaces 1458, or one or more operating systems 1441, for example, Windows Server™, Mac OS X™, Unix™, Linux™, or FreeBSD™.

In this embodiment of this application, the central processing unit 1414 is configured to perform an action related to model training in the foregoing embodiments.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in an execution device to perform the data processing method described in the foregoing embodiments, or enable a chip in a training device to perform the data processing method described in the foregoing embodiments. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

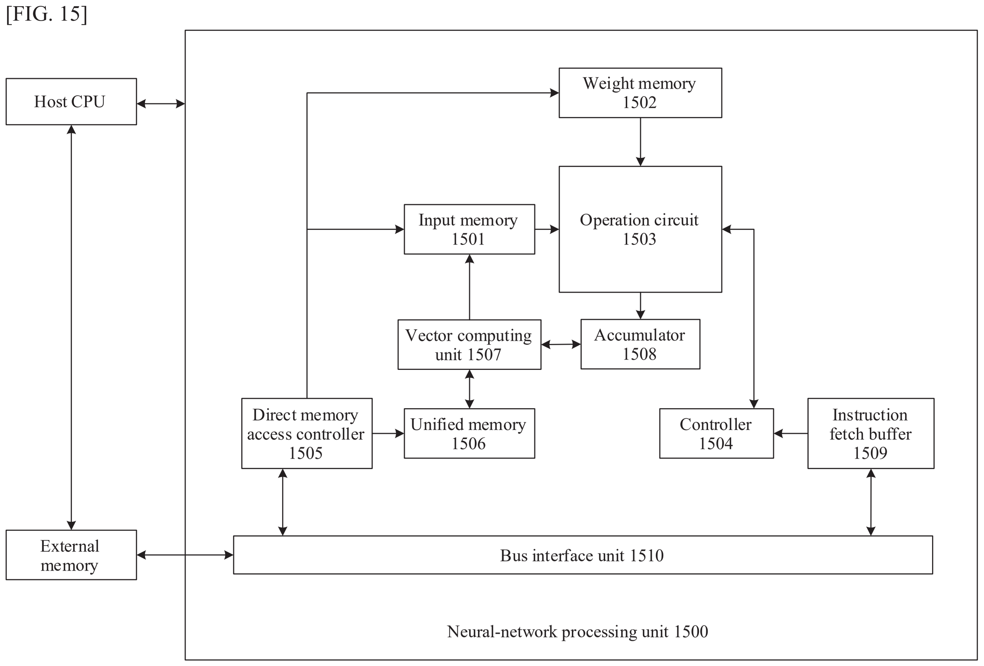

Specifically, FIG. 15 is a diagram of a structure of a chip according to an embodiment of this application. The chip may be represented by a neural-network processing unit NPU 1500. The NPU 1500 is mounted to a host CPU (Host CPU) as a coprocessor, and the host CPU assigns a task to the NPU 1500. A core part of the NPU is an operation circuit 1503, and a controller 1504 controls the operation circuit 1503 to extract matrix data in a memory and perform a multiplication operation.

In some implementations, the operation circuit 1503 includes a plurality of process engines (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there are an input matrix A, a weight matrix B, and an output matrix C. The operation circuit fetches, from a weight memory 1502, data corresponding to the matrix B, and caches the data in each PE in the operation circuit. The operation circuit fetches data of the matrix A from an input memory 1501 to perform a matrix operation on the matrix B, and stores an obtained partial result or an obtained final result of the matrix in an accumulator (accumulator) 1508.

A unified memory 1506 is configured to store input data and output data. Weight data is directly transferred to the weight memory 1502 through a direct memory access controller (Direct Memory Access Controller, DMAC) 1505. Input data is also transferred to the unified memory 1506 through the DMAC.

A BIU is a bus interface unit, namely, a bus interface unit 1510, and is used for interaction between an AXI bus, and the DMAC and an instruction fetch buffer (Instruction Fetch Buffer, IFB) 1509.

The bus interface unit (Bus Interface Unit, BIU for short) 1510 is used for the instruction fetch buffer 1509 to obtain instructions from an external memory, and is further used for the direct memory access controller 1505 to obtain raw data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector computing unit 1507 includes a plurality of operation processing units, and if needed, performs further processing, for example, vector multiplication, vector addition, an exponential operation, a logarithmic operation, or magnitude comparison, on an output of the operation circuit 1503. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1507 can store a processed output vector in the unified memory 1506. For example, the vector computing unit 1507 may apply a linear function or a nonlinear function to the output of the operation circuit 1503, for example, perform linear interpolation on a feature plane extracted at a convolutional layer. For another example, the vector computing unit 1507 may apply a linear function or a nonlinear function to a vector of an accumulated value, to generate an activation value. In some implementations, the vector computing unit 1507 generates a normalized value, a pixel-level summation value, or both a normalized value and a pixel-level summation value. In some implementations, the processed output vector can be used as an activation input for the operation circuit 1503, for example, used at a subsequent layer of the neural network.

The instruction fetch buffer (instruction fetch buffer) 1509 connected to the controller 1504 is configured to store instructions to be used by the controller 1504.

All of the unified memory 1506, the input memory 1501, the weight memory 1502, and the instruction fetch buffer 1509 are on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

**Claims**

1. A data processing method, wherein the method comprises:

   obtaining a first image, wherein the first image comprises text;
   processing the first image through a first neural network, to obtain a first feature representation, wherein the first feature representation is an image feature of the first image;
   processing the first image through a second neural network, to obtain a second feature representation, wherein the second feature representation is a text feature of the text comprised in the first image;
   performing fusion on the first feature representation and the second feature representation to obtain a first target feature representation; and
   determining a category of the first image based on the first target feature representation.

2. The method according to claim 1, wherein the first image is a trademark, and the determining the category of the first image based on the first target feature representation comprises:
   determining a category of the trademark based on similarities between the first target feature representation and a plurality of preset feature representations, wherein each preset feature representation is obtained by performing feature extraction on a trademark of one category.

3. The method according to claim 1 or 2, wherein the method further comprises:

performing dimension alignment between the second feature representation and the first feature representation; and
the performing fusion on the first feature representation and the second feature representation to obtain the first target feature representation comprises:
performing fusion on the first feature representation and the second feature representation after the dimension alignment, to obtain the first target feature representation.

4. The method according to any one of claims 1 to 3, wherein the first target feature representation and each preset feature representation are features mapped to hyperbolic space.

5. A data processing method, wherein the method comprises:

obtaining a first image and a second image, wherein the first image and the second image comprise text;
separately processing the first image and the second image through a first neural network, to obtain a first feature representation and a second feature representation, wherein the first feature representation is an image feature of the first image, and the second feature representation is an image feature of the second image;
separately processing the first image and the second image through a second neural network, to obtain a third feature representation and a fourth feature representation, wherein the first feature representation is a text feature of text comprised in the first image, and the second feature representation is a text feature of text comprised in the second image;
performing fusion on the first feature representation and the third feature representation to obtain a first target feature representation;
performing fusion on the second feature representation and the fourth feature representation to obtain a second target feature representation; and
determining a loss based on a relationship between the first target feature representation and the second target feature representation, and updating the first neural network based on the loss.

6. The method according to claim 5, wherein the first image and the second image comprise a trademark.

7. The method according to claim 5 or 6, wherein the first image and the second image comprise different styles of a same trademark, and the determining the loss based on the relationship between the first target feature representation and the second target feature representation comprises:
determining the loss through contrastive learning based on the relationship between the first target feature representation and the second target feature representation, wherein the loss is used to increase a first distance between the first target feature representation and the second target feature representation.

8. The method according to claim 5 or 6, wherein the first image and the second image comprise different trademarks, and the determining the loss based on the relationship between the first target feature representation and the second target feature representation comprises:
determining the loss through contrastive learning based on the relationship between the first target feature representation and the second target feature representation, wherein the loss is used to increase a second distance between the first target feature representation and the second target feature representation, and an increase in the second distance is greater than an increase in the first distance.

9. The method according to claim 5 or 6, wherein the first image and the second image comprise a same style of a same trademark, and the determining the loss based on the relationship between the first target feature representation and the second target feature representation comprises:
determining the loss through contrastive learning based on the relationship between the first target feature representation and the second target feature representation, wherein the loss is used to shorten a distance between the first target feature representation and the second target feature representation.

10. The method according to any one of claims 5 to 9, wherein the first image and the second image are obtained by performing object detection on a raw image through a detection network and then cropping the raw image, the first image is an image from which the detection network is able to recognize a target, the second image is an image from which the detection network is unable to recognize the target, and the determining the loss based on the relationship between the first target feature representation and the second target feature representation comprises:

determining the loss through contrastive learning based on the relationship between the first target feature representation and the second target feature representation, wherein the loss is used to increase a distance between the first target feature representation and the second target feature representation.

11. The method according to any one of claims 5 to 10, wherein the first image and the second image are obtained by performing object detection on a raw image through a detection network and then cropping the raw image, both the first image and the second image are images from which the detection network is unable to recognize a target, and the determining the loss based on the relationship between the first target feature representation and the second target feature representation comprises:

determining the loss through contrastive learning based on the relationship between the first target feature representation and the second target feature representation, wherein the loss is used to shorten a distance between the first target feature representation and the second target feature representation.

12. The method according to any one of claims 5 to 11, wherein the first target feature representation and the second target feature representation are features mapped to hyperbolic space.

13. A data processing apparatus, comprising:

a processing module, configured to: obtain a first image, wherein the first image comprises text;
process the first image through a first neural network, to obtain a first feature representation, wherein the first feature representation is an image feature of the first image;
process the first image through a second neural network, to obtain a second feature representation, wherein the second feature representation is a text feature of the text comprised in the first image;
perform fusion on the first feature representation and the second feature representation to obtain a first target feature representation; and
determine a category of the first image based on the first target feature representation.

14. The apparatus according to claim 13, wherein the first image is a trademark, and the determining the category of the first image based on the first target feature representation comprises:
determining a category of the trademark based on similarities between the first target feature representation and a plurality of preset feature representations, wherein each preset feature representation is obtained by performing feature extraction on a trademark of one category.

15. The apparatus according to claim 13 or 14, wherein the processing module is further configured to perform dimension alignment between the second feature representation and the first feature representation; and
the processing module is specifically configured to perform fusion on the first feature representation and the second feature representation after the dimension alignment, to obtain the first target feature representation.

16. A data processing apparatus, comprising:

a processing module, configured to: obtain a first image and a second image, wherein the first image and the second image comprise text;
separately process the first image and the second image through a first neural network, to obtain a first feature representation and a second feature representation, wherein the first feature representation is an image feature of the first image, and the second feature representation is an image feature of the second image;
separately process the first image and the second image through a second neural network, to obtain a third feature representation and a fourth feature representation, wherein the first feature representation is a text feature of text comprised in the first image, and the second feature representation is a text feature of text comprised in the second image;
perform fusion on the first feature representation and the third feature representation to obtain a first target feature representation;
perform fusion on the second feature representation and the fourth feature representation to obtain a second target feature representation; and
determine a loss based on a relationship between the first target feature representation and the second target feature representation, and updating the first neural network based on the loss.

17. The apparatus according to claim 16, wherein the first image and the second image comprise different styles of a same trademark, and the processing module is specifically configured to:
determine the loss through contrastive learning based on the relationship between the first target feature representation and the second target feature representation, wherein the loss is used to increase a first distance between the first target feature representation and the second target feature representation.

18. The apparatus according to claim 16, wherein the first image and the second image comprise different trademarks, and the processing module is specifically configured to:
determine the loss through contrastive learning based on the relationship between the first target feature representation and the second target feature representation, wherein the loss is used to increase a second distance between the first target feature representation and the second target feature representation, and an increase in the second distance is greater than an increase in the first distance.

19. The apparatus according to claim 16, wherein the first image and the second image comprise a same style of a same trademark, and the processing module is specifically configured to:
determine the loss through contrastive learning based on the relationship between the first target feature representation and the second target feature representation, wherein the loss is used to shorten a distance between the first target feature representation and the second target feature representation.

20. The apparatus according to any one of claims 16 to 19, wherein the first image and the second image are obtained by performing object detection on a raw image through a detection network and then cropping the raw image, the first image is an image from which the detection network is able to recognize a target, and the second image is an image from which the detection network is unable to recognize the target; and
the processing module is specifically configured to:
determine the loss through contrastive learning based on the relationship between the first target feature representation and the second target feature representation, wherein the loss is used to increase a distance between the first target feature representation and the second target feature representation.

21. The apparatus according to any one of claims 16 to 20, wherein the first image and the second image are obtained by performing object detection on a raw image through a detection network and then cropping the raw image, both the first image and the second image are images from which the detection network is unable to recognize a target, and the processing module is specifically configured to:
determine the loss through contrastive learning based on the relationship between the first target feature representation and the second target feature representation, wherein the loss is used to shorten a distance between the first target feature representation and the second target feature representation.

22. The apparatus according to any one of claims 16 to 21, wherein the first target feature representation and the second target feature representation are features mapped to hyperbolic space.

23. A computer storage medium, wherein the computer storage medium stores one or more instructions, and when the instructions are executed by one or more computers, the one or more computers are enabled to perform the operations of the method according to any one of claims 1 to 12.

24. A computer program product, comprising computer-readable instructions, wherein when the computer-readable instructions are run on a computer device, the computer device is enabled to perform the method according to any one of claims 1 to 12.

25. A system, comprising at least one processor and at least one memory, wherein the processor and the memory are connected to and communicate with each other through a communication bus, wherein

the at least one memory is configured to store code; and
the at least one processor is configured to execute the code to perform the method according to any one of claims 1 to 12.

[FIG. 1A]

Intelligent information chain

Intelligent products and industry application

Translation/Text analysis/...    Speech/Vision/Image/...

Data

Data processing:    Data training/Machine learning/Deep learning    Search/Inference/Decision-making    ...

Infrastructure    Sensor    Intelligent chip    Infrastructure platform    ...

IT value chain

EP 4 700 716 A1

26

[FIG. 1B]

101 Parameter → Image processing application 102 → Processing result 103

[FIG. 1C]

Parameter

Processing result

Terminal 100        Server 200

[FIG. 2]

Terminal 100

[FIG. 3]

Server 200

Processor 202

Communication interface 203

Bus 201

Memory 204

[FIG. 4]

500

Data collection device 560

Data stream

Database 530

Data stream

Training device 520

Execution device 510

Client device 540

Input data

I/O interface 512

Target model/ rule 501

Computing module 511

Output result

Preprocessing module 513

Preprocessing module 514

Data storage system 550

[FIG. 5]

Cloud platform

Trademark recognition service

**Cloud environment**

1. Activate a content moderation service

2. Download an SDK

4. Invoke the service

5. The service responds

3. Import an environment configuration and an SDK project

Local development environment

Application

[FIG. 6]

Obtain a first image and a second image, where the first image and the second image include text ⟋ 601

Separately process the first image and the second image through a first neural network, to obtain a first feature representation and a second feature representation, where the first feature representation is an image feature of the first image, and the second feature representation is an image feature of the second image ⟋ 602

Separately process the first image and the second image through a second neural network, to obtain a third feature representation and a fourth feature representation, where the first feature representation is a text feature of text included in the first image, and the second feature representation is a text feature of text included in the second image ⟋ 603

Perform fusion on the first feature representation and the third feature representation to obtain a first target feature representation ⟋ 604

Perform fusion on the second feature representation and the fourth feature representation to obtain a second target feature representation ⟋ 605

Determine a loss based on a relationship between the first target feature representation and the second target feature representation, and update the first neural network based on the loss ⟋ 606

[FIG. 7]

```
                    ┌─────────────┐
                    │    Start    │
                    └─────────────┘
                           │
                           ▼
        ┌──────────────────────────────────┐        ┌──────┐
        │ Pre-training stage: Train a       │───────│ S11  │
        │ trademark detection model M1 by   │        └──────┘
        │ using labeled data L              │
        └──────────────────────────────────┘
                           │
                           ▼
        ┌──────────────────────────────────┐        ┌──────┐
        │ Use M1 as an initial model, and   │───────│ S12  │
        │ obtain a new detection model M2   │        └──────┘
        │ through training by using         │
        │ unlabeled data U and the labeled  │
        │ data L                            │
        └──────────────────────────────────┘
                           │
                           ▼
        ┌──────────────────────────────────┐        ┌──────┐
        │ Use a standard target template    │───────│ S13  │
        │ library T and non-target samples  │        └──────┘
        │ that are obtained through         │
        │ inference by using the model M2   │
        │ and that serve as negative        │
        │ samples N to constitute first-    │
        │ level positive and negative       │
        │ samples, use subcategories in the │
        │ standard target template library  │
        │ T and other subcategories to      │
        │ constitute second-level positive  │
        │ and negative samples, and use a   │
        │ multi-level contrastive loss      │
        │ function F for training to obtain │
        │ a model M3                        │
        └──────────────────────────────────┘
                           │
                           ▼
                    ┌─────────────┐
                    │     End     │
                    └─────────────┘
```

[FIG. 8]

Template-based positive sample generation algorithm 310

Category-1
1
2
⋮

Category-2
1
2
⋮

Category-n
1
2
⋮

Standard target template library

Background picture

Random sampling

Random pasting

Generated labeled positive sample dataset

Labeled dataset L

Data augmentation

Model training

Pre-trained model M1

EP 4 700 716 A1

33

[FIG. 9]

Weak data augmentation

Pre-trained detection model M1 (with a fixed weight)

Unlabeled dataset U

EMA

Predict a pseudo label

Strong data augmentation

Threshold t

Student detection model M2

Labeled dataset L

Perspective transformation

Perspective transformation–based data augmentation algorithm 320

EP 4 700 716 A1

34

[FIG. 10]

Labeled dataset L

Pre-trained object detection network M2 (with a fixed weight)

Negative samples

n1    n3

n2    n4

...

Random sampling

Category-1

1
2
⋮

Category-2

1
2
⋮

Category-n

1
2
⋮

Standard target template library

Random sampling

Data augmentation

Retrieval feature vector extraction model

Cosine similarity calculation

Calculation of a multi-level contrastive loss function

Trademark recognition algorithm based on multi-level representation metrics 100

EP 4 700 716 A1

35

[FIG. 11A]

**Trademark recognition algorithm based on fusion of image features and character features**
**200**

**Image feature extraction network**

Feature vector

**Character feature extraction network**

**Dimension alignment**

**Feature fusion network**

**Hyperbolic space mapping**

[FIG. 11B]

original data distribution → After using our loss → new data distribution

[FIG. 11C]

For every single sample, we want ...

closer — further — more further — more further

[FIG. 11D]

Semi-supervised trademark detection algorithm based on combined data augmentation (300)

(a) Pre-training stage S11

(b) Semi-supervised trademark detection S12

Trademark recognition algorithm based on fusion of image features and character features (200)

Trademark recognition algorithm based on multi-level representation metrics (100)

(c) Trademark recognition algorithm based on fusion of multi-level representation metrics and multi-modal graphic and text features

EP 4 700 716 A1

38

[FIG. 11E]

[FIG. 11F]

Image feature extraction network

Feature vector

Character feature extraction network

Dimension alignment

Feature fusion network

Hyperbolic space mapping

Input image

Detection network

Detection result

1

2

⋮

Candidate targets obtained through cropping

Retrieval feature extraction model

Retrieval feature

Category-1

1

2

⋮

Category-2

1

2

⋮

Category-n

1

2

⋮

Standard target picture template library

Retrieval feature extraction model

Category-1

⋮

Category-2

⋮

Category-n

⋮

Standard target vector template library

Similarity calculation

Maximum similarity < threshold t

No

Output a category corresponding to the maximum similarity

Yes

Unknown category

EP 4 700 716 A1

40

[FIG. 12]

```
┌─────────────────────────────────────────────┐
│                    1200                       │
│                                               │
│                           1201                │
│            ┌──────────────────────────┐      │
│            │                           │      │
│            │     Processing module     │      │
│            │                           │      │
│            └──────────────────────────┘      │
│                                               │
└─────────────────────────────────────────────┘
```

[FIG. 13]

1300

Execution device

```
   Antenna                              Antenna
      │                                    │
┌─────┴────────────────┬───────────────────┴──────┐
│  ┌────────────────┐  │  ┌────────────────────┐  │
│  │  Receiver 1301 │  │  │  Transmitter 1302  │  │
│  └────────┬───────┘  │  └──────────┬─────────┘  │
│           ⇕          │             ⇕            │
│  ┌──────┐  ┌─────────────────────────────────┐ │
│  │Memory│⇔ │        Processor 1303           │ │
│  │ 1304 │  │  ┌────────────┐ ┌─────────────┐ │ │
│  │      │  │  │Application  │ │Communication│ │ │
│  │      │  │  │ processor   │ │  processor  │ │ │
│  │      │  │  │   13031     │ │   13032     │ │ │
│  │      │  │  └────────────┘ └─────────────┘ │ │
│  └──────┘  └─────────────────────────────────┘ │
└───────────────────────────────────────────────┘
```

[FIG. 14]

1400

Training device

1414 — Central processing unit

Power supply — 1426

Operating system — 1441

Data — 1444

Application program — 1442

Storage medium — 1430

Memory — 1432

Wired or wireless network interface — 1450

Input/Output interface — 1458

[FIG. 15]

Neural-network processing unit 1500

- Instruction fetch buffer 1509
- Controller 1504
- Weight memory 1502
- Operation circuit 1503
- Accumulator 1508
- Input memory 1501
- Vector computing unit 1507
- Unified memory 1506
- Direct memory access controller 1505
- Bus interface unit 1510
- Host CPU
- External memory

# INTERNATIONAL SEARCH REPORT

| | International application No. |
|---|---|
| | **PCT/CN2024/096385** |

### A. CLASSIFICATION OF SUBJECT MATTER

G06V10/764(2022.01)i

According to International Patent Classification (IPC) or to both national classification and IPC

### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS: CNTXT; DWPI; VEN; WPABS; ENTXT; CNKI; IEEE: 图像, 文本, 神经网络, 特征, 融合, 类别, 损失, 更新, image, text, neural network, feature, fuse, category, loss, update

### C. DOCUMENTS CONSIDERED TO BE RELEVANT

| Category* | Citation of document, with indication, where appropriate, of the relevant passages | Relevant to claim No. |
|---|---|---|
| PX | CN 116883715 A (HUAWEI TECHNOLOGIES CO., LTD.) 13 October 2023 (2023-10-13) claims 1-25, and description, paragraphs 5-306 | 1-25 |
| X | CN 110298338 A (BEIJING EXOCR TECHNOLOGIES CO., LTD.) 01 October 2019 (2019-10-01) description, paragraphs 7-115 | 1-25 |
| X | CN 110705460 A (BEIJING BAIDU NETCOM SCIENCE AND TECHNOLOGY CO., LTD.) 17 January 2020 (2020-01-17) description, paragraphs 71-178 | 1-25 |
| A | CN 115620019 A (GUANGZHOU HUANJU TIMES INFORMATION TECHNOLOGY CO., LTD.) 17 January 2023 (2023-01-17) entire document | 1-25 |
| A | KR 102234385 B1 (DREAM BIT CO., LTD.) 31 March 2021 (2021-03-31) entire document | 1-25 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 August 2024** | **27 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/096385**

| Patent document cited in search report | | | Publication date (day/month/year) | Patent family member(s) | | | Publication date (day/month/year) |
|---|---|---|---|---|---|---|---|
| CN | 116883715 | A | 13 October 2023 | None | | | |
| CN | 110298338 | A | 01 October 2019 | CN | 110298338 | B | 24 August 2021 |
| CN | 110705460 | A | 17 January 2020 | CN | 110705460 | B | 20 June 2023 |
| CN | 115620019 | A | 17 January 2023 | None | | | |
| KR | 102234385 | B1 | 31 March 2021 | KR | 20220090367 | A | 29 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310627422